# EUROPÄISCHE PATENTSCHRIFT

(11) **EP 3 820 292 B1**
(45) Veröffentlichungstag und Bekanntmachung des Hinweises auf die Patenterteilung: **09.09.2026**
(21) Anmeldenummer: 19731204.4
(22) Anmeldetag: 11.06.2019
(51) Int. Cl.: A21C 3/00

(54) **EINRICHTUNG ZUR FÖRDERUNG VON TEIG ENTLANG EINER FÖRDERSTRECKE**
SYSTEM FOR CONVEYING DOUGH ALONG A CONVEYING SECTION
SYSTÈME DE TRANSPORT DE PÂTE LE LONG D'UN TRAJET DE TRANSPORT

(30) Priorität: 13.07.2018 DE 102018117007
(43) Veröffentlichungstag der Anmeldung: 19.05.2021
(73) Patentinhaber: Fritsch Bakery Technologies GmbH & Co. KG, 97348 Markt Einersheim (DE)
(72) Erfinder: BERNHARDT, Udo, 97346 Iphofen (DE)
(74) Vertreter: Grünecker Patent- und Rechtsanwälte PartG mbB
(86) Internationale Anmeldenummer: PCT/EP2019/065260
(87) Internationale Veröffentlichungsnummer: WO 2020/011467

(56) Entgegenhaltungen:
- EP-A1- 3 066 928
- AU-B2- 566 508
- FR-A1- 2 649 591
- US-A- 6 001 403

## Beschreibung

Die Erfindung betrifft eine Einrichtung zur Förderung von Teig entlang einer Förderstrecke, umfassend ein eine Förderstrecke definierendes, insbesondere bandartiges, längliches Teigförderelement, welches Teigförderelement ein eine Auflagefläche für vermittels der Einrichtung förderbaren oder zu fördernden Teigs bildenden Teigauflagebereich und wenigstens einen sich in Längsrichtung des Teigförderelements seitlich entlang des Teigauflagebereichs erstreckenden Seitenbereich umfasst, wobei der wenigstens eine Seitenbereich bewegbar, insbesondere schwenkbewegbar, relativ zu dem Teigauflagebereich angeordnet oder ausgebildet ist.

Entsprechende Einrichtungen zur Förderung von Teig entlang einer Förderstrecke sind aus dem technologischen Gebiet der Verarbeitung von Teigen dem Grunde nach bekannt. Eine bekannte Ausführungsform einer entsprechenden Einrichtung ist als Bestandteil einer Bäckereimaschinenanlage z. B. in EP 3 066 928 A1 beschrieben.

Entsprechende Einrichtungen dienen bekanntermaßen auch dazu, den entlang einer Förderstrecke förderbaren bzw. zu fördernden Teig in gewisser Weise zu formen, d. h. insbesondere dem Teig eine bestimmte Querschnittsgeometrie zu verleihen, welche für nachfolgende Teigverarbeitungsprozesse, d. h. z. B. Teigformprozesse, erforderlich ist oder zumindest zweckmäßig sein kann.

In diesem Zusammenhang ist eine im Hinblick auf das jeweilige Materialverhalten besondere Ausführung des Teigförderelements in dem Teigauflagebereich sowie in jeweiligen Seitenbereichen gewünscht, welche mit Teigförderelementen bekannter Einrichtungen nicht oder in nicht zufriedenstellender Weise gegeben ist.

Der Erfindung liegt damit die Aufgabe zugrunde, eine demgegenüber verbesserte Einrichtung zur Förderung von Teig entlang einer Förderstrecke anzugeben.

Die Aufgabe wird durch eine Einrichtung gemäß Anspruch 1 gelöst. Die hierzu abhängigen Ansprüche betreffen mögliche Ausführungsformen der Einrichtung gemäß Anspruch 1.

Die hierin beschriebene Einrichtung ist zur Förderung von Teig entlang einer, typischerweise geradlinig verlaufenden, Förderstrecke eingerichtet. Vermittels der Einrichtung lassen sich kontinuierlich oder diskontinuierlich erzeugte Teigportionen bzw. -stücke entlang einer Förderstrecke fördern. Die Einrichtung kann auch als Teigfördereinrichtung bezeichnet bzw. erachtet werden.

Vermittels der Einrichtung lassen sich insbesondere (sehr) fließfähige bzw. (sehr) weiche Teige fördern.

Die Einrichtung kann einen Bestandteil einer übergeordneten Anlage zur Verarbeitung von Teig bilden bzw. einer solchen zugeordnet sein.

Die Einrichtung umfasst ein eine Förderstrecke definierendes, insbesondere bandartiges bzw. - förmiges oder kettenartiges bzw. -förmiges, Teigförderelement. Das Teigförderelement ist typischerweise länglich ausgebildet.

Das Teigförderelement kann sich zumindest abschnittsweise, insbesondere vollständig, parallel bezüglich einer horizontalen Referenzebene erstreckend ausgebildet sein; das Teigförderelement kann sonach wenigstens einen sich parallel bezüglich einer horizontalen Referenzebene erstreckend ausgebildeten Teigförderelementabschnitt aufweisen. Entsprechendes gilt für die durch das Teigförderelement definierte Förderstrecke. Denkbar ist es jedoch auch, dass das Teigförderelement sich zumindest abschnittsweise, gegebenenfalls vollständig, winklig geneigt bezüglich einer horizontalen Referenzebene erstreckend ausgebildet ist; das Teigförderelement kann sonach wenigstens einen sich winklig geneigt bezüglich einer horizontalen Referenzebene erstreckend ausgebildeten Teigförderelementabschnitt aufweisen. Entsprechendes gilt für die durch das Teigförderelement definierte Förderstrecke.

Das Teigförderelement kann ein- oder mehrstückig ausgebildet sein. Eine einstückige Ausführung des Teigförderelements ist typischerweise durch einen ein Förderband bildenden bandartigen bzw. -förmigen Teigförderelementkörper gebildet. Eine mehrstückige Ausführung ist typischerweise durch einen eine Förderkette bildenden kettenartigen bzw. -förmigen Teigförderelementkörper gebildet. Ein entsprechend kettenartiger bzw. -förmiger Teigförderelementkörper weist typischerweise mehrere miteinander unter Ausbildung des Teigförderelementkörpers verbindbare oder verbundene Teigförderelementkörperglieder auf. Das Teigförderelement kann in allen Ausführungen auch als Teigförderband bezeichnet bzw. erachtet werden.

Das Teigförderelement kann um wenigstens zwei, insbesondere rollenartige oder -förmige, Umlenkkörper umlaufend angeordnet bzw. ausgebildet sein. Die Einrichtung sonach wenigstens zwei, insbesondere rollenartige oder -förmige, Umlenkkörper umfassen, um welche das Teigförderelement umlaufend angeordnet oder ausgebildet ist. Entsprechende Umlenkkörper können z. B. an einer, insbesondere rahmenartigen bzw. -förmigen, Tragstruktur der Einrichtung angeordnet oder ausgebildet sein.

Das Teigförderelement umfasst in allen Ausführungen einen eine Auflagefläche für vermittels der Einrichtung förderbaren oder zu fördernden Teigs bildenden Teigauflagebereich und wenigstens einen sich in Längsrichtung des Teigförderelements seitlich entlang des Teigauflagebereichs erstreckenden Seitenbereich. Der Teigauflagebereich bildet querschnittlich betrachtet typischerweise einen mittleren Bereich, d. h. den Mittelbereich, des Teigförderelements. Der Teigauflagebereich kann bezogen auf eine gegebene Gesamtbreite des Teigförderelements z. B. einen Anteil von 50% oder mehr der gegebenen Gesamtbreite des Teigförderelements einnehmen. Für die typische Ausführungsform des Teigförderelements mit zwei Seitenbereichen gilt, dass der Teigauflagebereich ca. 50% und die beiden Seitenbereiche jeweils ca. 25% der Gesamtbreite des Teigförderelements einnehmen.

Der wenigstens eine Seitenbereich ist sich in Längsrichtung des Teigförderelements seitlich entlang des Teigauflagebereichs erstreckend an dem Teigauflagebereich angeordnet oder ausgebildet. Der wenigstens eine Seitenbereich weist typischerweise eine streifenartige- bzw. - förmige Geometrie auf. Der wenigstens eine Seitenbereich kann form-, kraft- und/oder stoffschlüssig an einer Längsseitenkante des Teigauflagebereichs an dem Teigauflagebereich bzw. im Bereich des Teigauflagebereichs angebunden sein. Typischerweise umfasst das Teigförderelement zwei entsprechende Seitenbereiche, wobei ein erster Seitenbereich sich in Längsrichtung des Teigförderelements seitlich entlang einer ersten Längsseitenkante des Teigauflagebereichs erstreckend an dem Teigauflagebereich angeordnet oder ausgebildet ist, d. h. insbesondere an einer ersten Längsseitenkante des Teigauflagebereichs angebunden ist, und ein zweiter Seitenbereich sich in Längsrichtung des Teigförderelements seitlich entlang einer zweiten Längsseitenkante des Teigauflagebereichs erstreckend an dem Teigauflagebereich angeordnet oder ausgebildet ist, d. h. insbesondere an einer zweiten Längsseitenkante des Teigauflagebereichs angebunden ist. Das Teigförderelement kann zumindest bezüglich der Anordnung jeweiliger Seitenbereiche und des mittig zwischen diesen angeordneten Teigauflagebereichs symmetrisch ausgeführt sein.

Der wenigstens eine Seitenbereich - Analoges gilt für eine Ausführung mit zwei Seitenbereichen - ist bewegbar, d. h. insbesondere schwenkbewegbar, relativ zu dem Teigauflagebereich an dem Teigauflagebereich angeordnet oder ausgebildet. Der wenigstens eine Seitenbereich kann sonach in unterschiedliche Stellungen und damit unterschiedliche Ausrichtungen relativ zu dem Teigauflagebereich bewegt werden.

Durch eine Bewegung eines Seitenbereichs relativ zu dem Teigauflagebereich - dies gilt insbesondere für eine entsprechende Bewegung zweier Seitenbereiche relativ zu dem Teigauflagebereich - kann ein den vermittels des Teigförderelements förderbaren oder zu fördernden Teig entlang der Förderstrecke querschnittlich betrachtet zumindest abschnittsweise seitlich, d. h. insbesondere U-artig bzw. U-förmig, umgebender Teigformungsbereich gebildet werden. Der wenigstens eine Seitenbereich kann sonach insbesondere zur Bildung eines den vermittels des Teigförderelements förderbaren oder zu fördernden Teig entlang der Förderstrecke querschnittlich betrachtet zumindest abschnittsweise seitlich, insbesondere U-artig bzw. U-förmig, umgebenden Teigformungsbereichs bewegbar, d. h. insbesondere schwenkbewegbar, relativ zu dem Teigauflagebereich angeordnet oder ausgebildet sein.

Der wenigstens eine Seitenbereich lässt sich insbesondere in wenigstens zwei Stellungen relativ zu dem Teigauflagebereich bewegen, wobei der wenigstens eine Seitenbereich in einer ersten Stellung querschnittlich betrachtet (im Wesentlichen) parallel zu dem Teigauflagebereich angeordnet und/oder ausgerichtet ist, insbesondere derart, dass sich querschnittlich betrachtet eine (im Wesentlichen) einheitlich ebene Oberfläche des Teigförderelements ergibt, und in einer zweiten Stellung querschnittlich betrachtet winklig, insbesondere rechtwinklig, zu dem Teigauflagebereich angeordnet und/oder ausgerichtet ist, insbesondere derart, dass ein den vermittels des Teigförderelements förderbaren oder zu fördernden Teig entlang der Förderstrecke querschnittlich betrachtet zumindest abschnittsweise seitlich, insbesondere U-artig bzw. U-förmig, umgebender Teigformungsbereich gebildet ist.

Für das Beispiel einer schwenkbaren Anordnung bzw. Ausbildung eines entsprechenden Seitenbereichs an dem Teigauflagebereich gilt sonach, dass der der wenigstens eine Seitenbereich zwischen einer ersten Schwenkstellung, in welcher der wenigstens einen Seitenbereich querschnittlich betrachtet (im Wesentlichen) parallel zu dem Teigauflagebereich angeordnet und/oder ausgerichtet ist, insbesondere derart, dass sich querschnittlich betrachtet eine (im Wesentlichen) einheitlich ebene Oberfläche des Teigförderelements ergibt, und wenigstens einer zweiten Schwenkstellung, in welcher der wenigstens eine Seitenbereich querschnittlich betrachtet winklig, insbesondere rechtwinklig, zu dem Teigauflagebereich angeordnet und/oder ausgerichtet ist, insbesondere derart, dass der den vermittels des Teigförderelements förderbaren oder zu fördernden Teig entlang der Förderstrecke querschnittlich betrachtet zumindest abschnittsweise seitlich, insbesondere U-artig bzw. U-förmig, umgebende Teigformungsbereich gebildet ist, und umgekehrt, verschwenkbar sein kann.

In allen Ausführungen kann die Anordnung bzw. Ausbildung eines entsprechenden Seitenbereichs an dem Teigauflagebereich z. B. durch eine gelenkartige bzw. -förmige oder eine scharnierartige bzw. -förmige Anbindung des Seitenbereichs an dem Teigauflagebereich realisiert sein. Ein entsprechender Seitenbereich kann z. B. durch wenigstens ein Gelenk- oder Scharnierelement an dem Teigauflagebereich angebunden sein. Für den Fall einer stoffschlüssigen Anbindung eines entsprechenden Seitenbereichs an dem Teigauflagebereich, welche z. B. bei einer einstückigen Ausführung des wenigstens einen Seitenbereichs und des Teigauflagebereichs gegeben sein kann, kann ein entsprechendes Gelenk- oder Scharnierelement z. B. durch ein Filmscharnier gebildet sein oder ein solches umfassen. Andere Arten der Anbindung eines Seitenbereichs an dem Teigauflagebereich sind mit der Maßgabe einer entsprechenden Bewegbarkeit des Seitenbereichs relativ zu dem Teigauflagebereich denkbar.

Das Teigförderelement weist im Bereich des Teigauflagebereichs bzw. in dem Teigauflagebereich ein biegesteifes Materialverhalten und im Bereich des wenigstens einen Seitenbereichs bzw. in dem wenigstens einen Seitenbereich ein elastisch-dehnbares Materialverhalten auf. Das Teigförderelement weist sonach lokal unterschiedliche mechanische Eigenschaften und somit ein lokal unterschiedliches Materialverhalten auf, indem es im Bereich des Teigauflagebereichs bzw. in dem Teigauflagebereich gezielt biegesteif bzw. hart und im Bereich des wenigstens einen Seitenbereichs bzw. in dem wenigstens einen Seitenbereich gezielt elastisch-dehnbar bzw. weich ausgeführt ist. Derart ist ein, insbesondere im Hinblick auf Teigförderung und Teigformung, verbessertes Teigförderelement und somit eine verbesserte Einrichtung gegeben, als das Teigförderelement in dem Bereich des Teigauflagebereichs bzw. in dem Teigauflagebereich ein gewünschtes biege- bzw. quersteifes und somit im Allgemeinen steifes bzw. hartes Materialverhalten und in dem Bereich des wenigstens einen Seitenbereichs bzw. in dem wenigstens einen Seitenbereich ein gewünschtes elastisch-dehnbares und somit im Allgemeinen weiches Materialverhalten aufweist. Diese gezielte Kombination von unterschiedlichen mechanischen Eigenschaften bzw. unterschiedlichem Materialverhalten im Bereich des Teigauflagebereichs bzw. in dem Teigauflagebereich und im Bereich des wenigstens einen Seitenbereichs bzw. in dem wenigstens einen Seitenbereich wirkt sich positiv auf Teigförderung und Teigformung aus.

Das biegesteife Materialverhalten im Bereich des Teigauflagebereichs bzw. in dem Teigauflagebereich ist zunächst deshalb zweckmäßig, als beim Bewegen bzw. Schwenkbewegen der Seitenbereiche relativ zu dem Teigauflagebereich erhebliche Kräfte auf den Teigauflagebereich wirken können, welche ohne entsprechende Biegesteifigkeit zu einem Durchbiegen des Teigauflagebereichs führen können. Ferner kann das biegesteife Materialverhalten im Bereich des Teigauflagebereichs bzw. in dem Teigauflagebereich zweckmäßig sein, als auf den Teigauflagebereich bei Teigförderung und Teigformung erhebliche Kräfte, d. h. insbesondere Biege- bzw. Druckkräfte, wirken können, welche durch das biegesteife Materialverhalten des Teigförderelements im Bereich des Teigauflagebereichs aufgenommen werden können. Der Teig kann sonach auf einem im Bereich des Teigauflagebereichs mechanisch stabil ausgeführten Teigförderelement abgelegt, gefördert und geformt werden, was eine reproduzierbare geometrisch definierte Teigformung ermöglicht. Es besteht aufgrund der lokal biegesteifen Ausführung (auch bei vergleichsweise großen Teigmassen) keine oder eine weitaus reduziertere Möglichkeit der Durchbiegung des Teigförderelements im Bereich des Teigauflagebereichs. Die Biegesteifigkeit ist nicht so hoch gewählt, dass eine Umlenkung des Teigförderelements an entsprechenden Umlenkkörpern nicht mehr möglich ist.

Das elastisch-dehnbare Materialverhalten im Bereich des wenigstens einen Seitenbereichs bzw. in dem wenigstens einen Seitenbereich ist deshalb zweckmäßig, als auf den wenigstens einen Seitenbereich bei einer entsprechenden Bewegung, d. h. insbesondere einer entsprechenden Schwenkbewegung, relativ zu dem Teigauflagebereich erhebliche Kräfte, d. h. insbesondere Dehn- bzw. Zugkräfte, wirken können, welche durch das elastisch-dehnbare Materialverhalten des Teigförderelements im Bereich des wenigstens einen Seitenbereichs aufgenommen werden können. Eine durch eine Bewegung des wenigstens einen Seitenbereichs relativ zu dem Teigauflagebereich herbei geführte Dehnung des wenigstens einen Seitenbereichs ist sonach aufgrund des elastisch-dehnbaren Materialverhaltens ohne Gefahr einer Schädigung des Teigförderelements möglich. Das elastisch-dehnbare Materialverhalten kann zudem ein elastisches Rückstellverhalten des wenigstens Seitenbereichs von einem gedehnten Zustand, welcher typischerweise bei entsprechender Bewegung des wenigstens einen Seitenbereichs zu dem Teigauflagebereich gegeben ist, in einen weniger oder ungedehnten Zustand ermöglichen.

Das unterschiedliche Materialverhalten im Bereich des Teigauflagebereichs bzw. in dem Teigauflagebereich und im Bereich des wenigstens einen Seitenbereichs bzw. in dem wenigstens einen Seitenbereich kann z. B. durch unterschiedliche Materialien bzw. Materialstrukturen zur Ausbildung des Teigauflagebereichs und des wenigstens einen Seitenbereichs, d. h. unterschiedliche Materialpaarungen bzw. Materialstrukturpaarungen, herbeigeführt sein. Mithin kann ein biegesteifes bzw. hartes Material bzw. eine biegesteife bzw. harte Materialstruktur im Bereich des Teigauflagebereichs bzw. in dem Teigauflagebereich und ein elastisch-dehnbares bzw. weiches Material bzw. eine elastisch-dehnbare bzw. weiche Materialstruktur im Bereich des wenigstens einen Seitenbereichs bzw. in dem wenigstens einen Seitenbereich verwendet werden.

Alternativ oder ergänzend ist es z. B. auch denkbar, durch baulich-konstruktive Maßnahmen lokal unterschiedliche mechanische Eigenschaften und somit ein lokal unterschiedliches Materialverhalten zu erzeugen. Im Bereich des Teigauflagebereichs bzw. in dem Teigauflagebereich kann z. B. eine erhöhte Dicke bzw. Wandstärke des jeweiligen Materials bzw. der jeweiligen Materialstruktur vorgesehen und/oder das jeweilige Material bzw. die jeweilige Materialstruktur mit Verstärkungselementen, wie z. B. Rippen, versehen sein. Im Bereich des wenigstens einen Seitenbereichs bzw. in dem wenigstens einen Seitenbereich kann z. B. eine erniedrigte Dicke bzw. Wandstärke des jeweiligen Materials bzw. der jeweiligen Materialstruktur vorgesehen und/oder das jeweilige Material bzw. die jeweilige Materialstruktur mit Schwächungselementen, wie z. B. Aussparungen, versehen sein. Dies gilt insbesondere auch für die Verwendung von (chemisch) ähnlichen bzw. gleichen Materialien zur Ausbildung des Teigförderelements im Bereich des Teigauflagebereichs und des wenigstens einen Seitenbereichs.

Insgesamt liegt eine verbesserte Einrichtung zur Förderung von Teig entlang einer Förderstrecke vor.

Das Teigförderelement ist, insbesondere im Bereich des Teigauflagebereichs bzw. in dem Teigauflagebereich, zumindest abschnittsweise, insbesondere vollständig, durch eine biegesteife Versteifungsstruktur zur Biege- bzw. Querversteifung des Teigauflagebereichs ausgebildet oder umfasst wenigstens eine solche. Die Versteifungsstruktur ist durch ein biegesteifes Material oder eine biegesteife Materialstruktur gebildet. Als biegesteife Materialien kommen z. B. biegesteife Kunststoffmaterialien in Betracht. Insbesondere sind, gegebenenfalls mit Verstärkungsfasern, wie z. B. Glasfasern, versehene, biegesteife duro- oder thermoplastische Kunststoffmaterialien denkbar. Als biegesteife Materialstrukturen kommen z. B. Anordnungen und/oder Ausrichtungen von Materialien bzw. aus solchen gebildeten Bauelemente in Betracht, welche in einer Biegesteifigkeit resultieren. Denkbar sind z. B. gitter- oder rippenartige Anordnungen bzw. Ausrichtungen entsprechender Bauelemente. Wie erwähnt, ist die Biegesteifigkeit so gewählt, dass eine Umlenkung des Teigförderelements an entsprechenden Umlenkkörpern möglich ist.

Die Versteifungsstruktur ist durch einen biegesteifen Trägerkörper gebildet, wobei an und/oder auf dem Trägerkörper ein den wenigstens einen Seitenbereich bildendes elastisch-dehnbares Material oder eine den wenigstens einen Seitenbereich bildende elastisch-dehnbare Materialstruktur angebracht ist. Das elastisch-dehnbare Material oder die elastisch-dehnbare Materialstruktur kann z. B. als Seitenbereichselement an dem wenigstens einen Trägerkörper anliegend an dem wenigstens einen Trägerkörper angebracht sein. Alternativ oder ergänzend kann das elastisch-dehnbare Material oder die elastisch-dehnbare Materialstruktur als Auflageelement auf dem wenigstens einen Trägerkörper aufliegend an und/oder auf dem wenigstens einen Trägerkörper angebracht sein. Das elastisch-dehnbare Material bzw. die elastisch-dehnbare Materialstruktur kann eine Oberfläche bzw. Oberseite des wenigstens einen Trägerkörpers sonach zumindest abschnittsweise, insbesondere vollständig, überspannen. Dabei ist es auch möglich, dass ein Abschnitt des elastisch-dehnbaren Materials bzw. der elastisch-dehnbaren Materialstruktur zumindest abschnittsweise, gegebenenfalls vollständig, den Teigauflagebereich bildet. Die Biegesteifigkeit des Teigförderelements im Bereich des Teigauflagebereichs bzw. in dem Teigauflagebereich ist aufgrund der Biegesteifigkeit des wenigstens einen Trägerkörpers auch in diesem Fall gegeben. Selbstverständlich können mehrere Trägerkörper, z. B. in einer reihen- oder stapelartigen Anordnung, vorgesehen sein.

Ein Trägerkörper kann querschnittlich betrachtet z. B. eine rechteckige Geometrie aufweisen. Der Trägerkörper ist in seiner maximalen Breite typischerweise so bemessen, dass er der Breite des Teigauflagebereichs entspricht. Analoges gilt für den Fall, in dem der Trägerkörper mehrteilig ausgeführt ist, mithin mehrere den Trägerkörper bildende Trägerkörpersegmente vorhanden sind.

Die Anbringung des elastisch-dehnbaren Materials bzw. der elastisch-dehnbaren Materialstruktur an und/oder auf dem wenigstens einen Trägerkörper kann in allen Fällen z. B. form-, kraft- und/oder stoffschlüssig erfolgen. Insbesondere kommen stoffschlüssige Anbringungsarten wie Kleben oder Schweißen in Betracht, als diese eine stabile Verbindung, insbesondere auch chemisch gegebenenfalls schlecht oder nicht-verträglicher Materialien, erlaubt.

Das Teigförderelement kann zumindest in dem Teigauflagebereich zumindest abschnittsweise mit einer wenigstens ein Versteifungselement umfassenden Versteifungsstruktur zur Biege- bzw. Querversteifung zumindest des Teigauflagebereichs versehen. Die Versteifungsstruktur verleiht dem Teigförderelement, d. h. insbesondere dem Teigauflagebereich, wie erwähnt, eine ausreichend hohe Biege- bzw. Quersteifigkeit, sodass die beim Bewegen bzw. Schwenkbewegen des oder der Seitenbereiche relativ zu dem Teigauflagebereich auf den Teigauflagebereich wirkenden Kräfte nicht zu einem Durchbiegen des Teigauflagebereichs führen und mit dem Teigförderelement eine reproduzierbare definierte Teigformung möglich ist, welche für nachfolgende Teigverarbeitungsprozesse erforderlich oder zumindest zweckmäßig sein kann. Dem vermittels der Einrichtung förderbaren bzw. zu fördernden Teig kann sonach reproduzierbar eine definierte Querschnittsgeometrie verliehen werden. Insbesondere kann dem vermittels der Einrichtung förderbaren bzw. zu fördernden Teig während der Förderung entlang der Förderstrecke eine definierte rechteckige Querschnittsgeometrie verliehen werden, da der Teigauflagebereich aufgrund der Versteifungsstruktur, insbesondere auch beim Verschwenken des oder der Seitenbereiche, nicht geneigt ist, sich durchzubiegen. Aufgrund der Versteifung des Teigförderelements im Bereich des Teigauflagebereichs ist eine (weitgehend) ebene Auflage des Teigs auf dem Teigförderelement gewährleistet.

Aufgrund der Versteifung des Teigförderelements im Bereich des Teigauflagebereichs kann ferner eine etwaig auf das Teigförderelement wirkende (mechanische) Spannung, um das Teigförderelement eben zu halten, reduziert werden, da das Teigförderelement aus sich heraus bereits derart mechanisch stabil, d. h. insbesondere steif, ist, dass eine (zusätzlich) aufgebrachte Spannung nicht oder in einem (erheblich) reduzierten Ausmaß erforderlich ist, um den Teigauflagebereich bzw. das Teigförderelement eben zu halten.

Die durch die Versteifungsstruktur herbeigeführte (zusätzliche) mechanische Stabilisierung bzw. Versteifung des Teigförderelements zumindest in dem Teigauflagebereich, kann sich ferner positiv auf die Fördereigenschaften des Teigförderelements auswirken.

Die Versteifungsstruktur kann in einer beispielhaften Ausführungsform wenigstens ein Versteifungselement in Form eines, insbesondere in dem Teigauflagebereich, an oder in dem Teigförderelement angeordneten oder ausgebildeten, insbesondere stab- oder strebenartigen, Versteifungskörpers umfassen. Die Versteifungsstruktur kann wenigstens eine zwei- oder dreidimensionale Anordnung mehrerer entsprechender Versteifungskörper umfassen. Eine entsprechende Anordnung mehrerer entsprechender Versteifungskörper kann so gewählt sein, dass sich aufgrund der Anordnung und/oder Ausrichtung der Versteifungskörper ein versteifender Effekt ergibt. Dies kann z. B. für eine gitter- und/oder netzartige Anordnung von Versteifungskörpern gelten. Entsprechende Versteifungskörper können sonach in einer oder mehreren Ebenen sich in einer oder mehreren Raumrichtungen erstreckend angeordnet oder ausgebildet sein. Die Anzahl und Anordnung entsprechender Versteifungskörper kann lokal variieren, sodass gezielt lokal unterschiedliche Steifigkeiten erzeugt werden können.

Die Steifigkeit eines entsprechenden Versteifungskörpers kann die Steifigkeit des übrigen Teigförderelements bzw. eines das übrige Teigförderelement bildenden Grundmaterials übertreffen. Ein entsprechender Versteifungskörper kann sonach aus einem im Vergleich zu dem Teigförderelement steiferen Material, d. h. z. B. einem im Vergleich steiferen Kunststoff oder Metall, gebildet sein. Dies ist jedoch nicht zwingend erforderlich, als sich ein versteifender Effekt, wie erwähnt, auch aus der Anordnung mehrerer entsprechender Versteifungskörper ergeben kann.

Ein entsprechender Versteifungskörper kann z. B. als ein eine Versteifung zumindest des Teigauflagebereichs herbeiführender Zugkörper, insbesondere ein eine Versteifung zumindest des Teigauflagebereichs herbeiführender Zugstab, ausgebildet sein.

Die Versteifungsstruktur kann in einer weiteren beispielhaften Ausführungsform wenigstens ein Versteifungselement in Form einer, insbesondere in dem Teigauflagebereich, an oder in dem Teigförderelement angeordnete oder ausgebildete, insbesondere textilartige, Verstärkungsfaseranordnung umfassen. Die Verstärkungsfaseranordnung umfasst typischerweise eine geordnete oder ungeordnete textilartige zwei- oder dreidimensionale Anordnung mehrerer Verstärkungsfasern. Eine textilartige Anordnung von Verstärkungsfasern kann z. B. gestrick-, gewebe-, gewirr- oder gewirkeartig sein; bei der Verstärkungsfaseranordnung kann es sich sonach z. B. um ein Gestrick, Gewebe, Gewirr oder Gewirke handeln. Eine textilartige Anordnung der Verstärkungsfasern ist typischerweise so gewählt, dass sich aufgrund der Anordnung und/oder Ausrichtung der Verstärkungsfasern ein versteifender Effekt ergibt. Dies kann z. B. für eine gestrick-, gewebe-, gewirr- oder gewirkeartige Anordnung von Verstärkungsfasern gelten. Eine entsprechende Verstärkungsfaseranordnung bzw. entsprechende Verstärkungsfasern kann bzw. können sonach in einer oder mehreren Ebenen sich in einer oder mehreren Raumrichtungen erstreckend angeordnet oder ausgebildet sein. Die Anzahl und Anordnung entsprechender Verstärkungsfasern kann lokal variieren, sodass gezielt lokal unterschiedliche Steifigkeiten erzeugt werden können.

Die Steifigkeit einer entsprechenden Verstärkungsfaseranordnung bzw. Verstärkungsfaser kann die Steifigkeit des übrigen Teigförderelements bzw. eines das übrige Teigförderelement bildenden Grundmaterials übertreffen. Eine entsprechende Verstärkungsfaseranordnung bzw. Verstärkungsfaser kann sonach aus einem im Vergleich zu dem Teigförderelement steiferen Material, d. h. z. B. einem im Vergleich steiferen Metall bzw. Kunststoff, gebildet sein. Dies ist jedoch nicht zwingend erforderlich, als sich ein versteifender Effekt, wie erwähnt, auch aus der Anordnung mehrerer entsprechender Verstärkungsfaseranordnungen bzw. Verstärkungsfasern ergeben kann.

Die Verstärkungsfaseranordnung kann z. B. durch eine, insbesondere textilartige, Anordnung von Carbon- und/oder Glasfasern und/oder Metallfasern bzw. -drähten gebildet sein.

Die Versteifungsstruktur kann in einer weiteren beispielhaften Ausführungsform wenigstens ein Versteifungselement in Form einer im Bereich einer dem Teigauflagebereich abgewandten Oberfläche des Teigförderelements angeordneten bzw. angebrachten, insbesondere flächigen, Verstärkungsunterlage umfassen. Selbstverständlich kann eine Anordnung mehrerer Verstärkungsunterlagen vorgesehen sein. Eine entsprechende Anordnung mehrerer Verstärkungsunterlagen kann so gewählt sein, dass sich aufgrund der Anordnung und/oder Ausrichtung der Verstärkungsunterlagen ein (zusätzlicher) versteifender Effekt ergibt. Dies kann z. B. für eine stapelartige bzw. -förmige Anordnung von Verstärkungsunterlagen gelten. Entsprechende Verstärkungsunterlagen können sonach in einer oder mehreren Ebenen sich in einer oder mehreren Raumrichtungen erstreckend angeordnet oder ausgebildet sein. Die Anzahl und Anordnung entsprechender Verstärkungsunterlagen kann lokal variieren, sodass gezielt lokal unterschiedliche Steifigkeiten erzeugt werden können.

Die Steifigkeit einer entsprechenden Verstärkungsunterlage kann die Steifigkeit des übrigen Teigförderelements bzw. eines das übrige Teigförderelement bildenden Grundmaterials übertreffen. Eine entsprechende Verstärkungsunterlage kann sonach aus einem im Vergleich zu dem Teigförderelement steiferen Material gebildet sein. Dies ist jedoch nicht zwingend erforderlich, als sich ein versteifender Effekt, wie erwähnt, auch aus der Anordnung mehrerer entsprechender Verstärkungsunterlagen ergeben kann. Denkbar ist es auch, dass eine entsprechende Verstärkungsunterlage aufgrund einer größeren Dicke im Vergleich zu dem Teigförderelement eine erhöhte Steifigkeit aufweist.

Eine entsprechende Verstärkungsunterlage kann aus einem steifen Material, d. h. z. B. einem steifen Kunststoff oder Metall, oder einer steifen Materialstruktur, d. h. z. B. einer steifen Kunststoff- oder Metallstruktur, wie z. B. einer kettenartigen bzw. -förmigen Kunststoff- oder Metallstruktur, gebildet sein.

Sämtliche beschriebenen Ausführungsformen der Versteifungsstruktur sind beliebig mit- bzw. untereinander kombinierbar.

Das Teigförderelement kann zumindest im Bereich seiner den Teigauflagebereich aufweisenden Oberfläche zumindest abschnittsweise flexibel, d. h. insbesondere die den Teigauflagebereich aufweisende Oberfläche des Teigförderelements mit einer im Vergleich zu der nicht den Teigauflagebereich aufweisenden Oberfläche größeren Flexibilität bzw. Weichheit, ausgebildet sein. Das Teigförderelement kann sonach zumindest in dem Teigauflagebereich mit unterschiedlichen flexiblen Eigenschaften respektive Härte- bzw. Weichheitsgraden ausgebildet sein. An dieser Stelle ist allgemein zu erwähnen, dass das Teigförderelement z. B. aus einem natürlichen oder synthetischen Elastomermaterial oder einem natürlichen oder synthetischen Harzmaterial, insbesondere einem PU-Harzmaterial, gebildet sein kann.

Ferner ist allgemein zu erwähnen, dass die Seitenbereiche im Vergleich zu dem Teigauflagebereich eine geringere Härte aufweisen. Die Seitenbereiche können z. B. eine Härte in einem Bereich zwischen 70 und 80 Shore A aufweisen, wohingegen der Teigauflagebereich z. B. eine Härte von wenigstens 95 Shore A aufweist.

Wenngleich der Teigauflagebereich, wie beschrieben, ein- oder mehrlagig ausgeführt sein kann, sind die Seitenbereiche des Teigförderelements in allen Ausführungsformen typischerweise (nur) einlagig ausgebildet. Hierunter ist insbesondere zu verstehen, dass das Teigförderelement im Gegensatz zu dem in EP 3 066 928 A1 beschriebenen Förderbandeinrichtung kein Teigförderband, welches im Bereich seiner Längsseitenkanten wenigstens zweilagig ausgebildet ist, wobei seitliche obere Lagen flexibel und mit Abstand von den Längsseitenkanten über jeweils eine, insbesondere linienartige, Verbindung an der oder einer unteren Lage oder einem Mittelbereich angeordnet sind, umfasst.

Das Teigförderelement kann im Bereich seiner dem Teigauflagebereich abgewandten Oberfläche zumindest abschnittsweise mit einer, insbesondere zahnriemenartigen bzw. -förmigen, Antriebsstruktur ausgebildet sein oder eine solche umfassen. Die Antriebsstruktur ist typischerweise eingerichtet, mit einer das Teigförderelement in eine Förderbewegung versetzenden Antriebseinrichtung zusammenzuwirken. Das Teigförderelement kann im Bereich seiner dem Teigauflagebereich abgewandten Oberfläche, welche auch als Innenseite des Teigförderelements bezeichnet bzw. erachtet werden kann, sonach mit der Funktionalität eines Kraftübertragungselements, wie z. B. eines Treib- bzw. Transmissionsriemens, ausgebildet sein. Das Zusammenwirken zwischen der Antriebsstruktur und einer entsprechenden Antriebseinrichtung kann insbesondere in einer mechanischen Kopplung, d. h. insbesondere in einem mechanischen Eingriff, der teigförderelementseitigen Antriebsstruktur, d. h. z. B. jeweiliger Antriebselemente der teigförderelementseitigen Antriebsstruktur, mit hierzu korrespondierenden Antriebselementen der Antriebseinrichtung bestehen. Durch das Zusammenwirken der teigförderelementseitigen Antriebsstruktur und der Antriebseinrichtung - bei dieser handelt es sich typischerweise um einen Antriebsmotor bzw. umfasst diese typischerweise wenigstens einen solchen - ist eine Übertragung einer das Teigförderelement in eine Förderbewegung versetzenden Antriebskraft auf das Teigförderelement möglich. Es ist denkbar, dass auch eine teigförderelementseitige Antriebsstruktur aufgrund ihrer geometrisch-konstruktiven Ausgestaltung eine versteifende Wirkung auf das Teigförderelement ausüben kann und sonach als Versteifungsstruktur erachtet werden kann. Die Antriebsstruktur bzw. jeweilige Antriebselemente der teigförderelementseitigen Antriebsstruktur kann/können sich querschnittlich betrachtet zumindest abschnittsweise, insbesondere vollständig, über die Breite zumindest des Teigauflagebereichs erstrecken.

Die Einrichtung kann eine das Teigförderelement, insbesondere in Längsrichtung des Teigförderelements, (mechanisch) spannende Spanneinrichtung umfassen. Eine entsprechende Spanneinrichtung ist zur Erzeugung einer das Teigförderelement, insbesondere in Längsrichtung des Teigförderelements, spannenden Spannkraft eingerichtet. Eine entsprechende Spanneinrichtung kann ein oder mehrere auf das Teigförderelement zur Spannung des Teigförderelements, insbesondere in Längsrichtung des Teigförderelements, wirkende Spannelemente umfassen. Bei entsprechenden Spannelementen kann es sich z. B. um Spannfedern handeln.

Es wurde erwähnt, dass der wenigstens eine Seitenbereich zur Bildung eines den vermittels des Teigförderelements förderbaren oder zu fördernden Teig entlang der Förderstrecke querschnittlich betrachtet zumindest abschnittsweise seitlich, insbesondere U-artig bzw. U-förmig, umgebenden Teigformungsbereichs bewegbar, d. h. insbesondere schwenkbewegbar, relativ zu dem Teigauflagebereich angeordnet oder ausgebildet an dem Teigauflagebereich sein kann.

Die Einrichtung kann eine Stützeinrichtung umfassen, welche zur Stützung und/oder Stabilisierung des wenigstens einen Seitenbereichs in der weiter oben erläuterten zweiten Stellung bzw. der zweiten Schwenkstellung eingerichtet ist. Eine entsprechende Stützeinrichtung umfasst typischerweise wenigstens einen Stützkörper, welcher wenigstens einen den wenigstens einen Seitenbereich in der zweiten Stellung bzw. der zweiten Schwenkstellung stützenden Stützkörperabschnitt umfasst. Ein entsprechender Stützkörper ist typischerweise sich in Längsrichtung des Teigförderelements erstreckend angeordnet bzw. ausgebildet. Ein entsprechender Stützkörper kann z. B. als Stützstrebe ausgeführt sein. Die Stützeinrichtung kann mehrere entsprechende Stützstreben, insbesondere in paralleler Anordnung und Ausrichtung, umfassen. Ein entsprechender Stützkörper kann z. B. auch als Stützkeil ausgeführt sein; ein entsprechender Stützkörper kann querschnittlich betrachtet sonach zumindest abschnittsweise keilartig bzw. -förmig ausgebildet sein. Typischerweise ist jedem Seitenbereich eine entsprechende Stützeinrichtung, d. h. wenigstens ein entsprechender Stützkörper, zugeordnet.

Für alle Ausführungsformen gilt, dass ein entsprechender Stützkörper, z. B. durch eine Segmentierung, mit unterschiedlich funktionalisierten bzw. Stützkörperabschnitten ausgebildet sein kann. Dabei kann ein erster Stützkörperabschnitt einen ersten Seitenbereichabschnitt in einer ersten winkligen Ausrichtung relativ zu dem Teigauflagebereich stützen und wenigstens ein zweiter Stützkörperabschnitt einen zweiten Seitenbereichabschnitt in einer zweiten winkligen Ausrichtung relativ zu dem Teigauflagebereich stützen. Die erste winklige Ausrichtung des ersten Seitenbereichabschnitts kann querschnittlich betrachtet eine winklige Ausrichtung des ersten Seitenbereichabschnitts in einem Winkelbereich zwischen 0 und 90° relativ zu dem Teigauflagebereich bedingen. Die zweite winklige Ausrichtung des zweiten Seitenbereichabschnitts kann querschnittlich betrachtet eine winklige Ausrichtung des zweiten Seitenbereichabschnitts in einem Winkelbereich zwischen 0 und 90° relativ zu dem ersten Seitenbereichabschnitt bedingen.

Die Stützkörpereinrichtung kann sonach zwei relativ zu einem auf dem Teigauflagebereich aufgelegten Teig unterschiedlich anordenbare und ausrichtbare respektive relativ zu einem auf dem Teigauflagebereich aufgelegten Teig unterschiedliche angeordnete und ausgerichtete Stützkörper bzw. Stützkörperabschnitte umfassen. Die Ausrichtung der Stützkörper bzw. Stützkörperabschnitte kann durch eine gesonderte Führungseinrichtung erfolgen, welche die Stützkörper bzw. Stützkörperabschnitte in die entsprechende Anordnung bzw. Ausrichtung relativ zu dem ersten bzw. zweiten Seitenbereichabschnitt bewegt.

Entsprechend kann auch ein Seitenbereich sonach zwei relativ zu einem auf dem Teigauflagebereich aufgelegten Teig unterschiedlich anordenbare und ausrichtbare respektive relativ zu einem auf dem Teigauflagebereich aufgelegten Teig unterschiedliche angeordnete und ausgerichtete Seitenbereichabschnitte umfassen. Dabei kann ein erster Seitenbereichabschnitt insbesondere derart relativ zu einem auf dem Teigauflagebereich aufgelegten Teig angeordnet und ausgerichtet sein, dass dieser den Teig seitlich umgibt bzw. stützt, und ein zweiter Seitenbereichabschnitt insbesondere derart relativ zu dem auf dem Teigauflagebereich aufgelegten Teig angeordnet und ausgerichtet sein, dass dieser den Teig zumindest abschnittsweise oberseitig umgibt bzw. stützt. Eine unterseitige Stützung des Teigs ist, wie erläutert, durch den Teigauflagebereich gegeben.

Die beiden Seitenbereichabschnitte können dabei unabhängig voneinander in unterschiedliche Anordnungen bzw. Ausrichtungen relativ zu dem Teigauflagebereich bzw. einem auf dem Teigauflagebereich aufgelegten Teig angeordnet und ausgerichtet werden.

Die vorstehenden Erläuterungen lassen sich beispielhaft anhand eines querschnittlich betrachtet (im Wesentlichen) rechteckigen Teigs bzw. Teigstücks erläutern, welcher mit einer Längsseite (Unterseite) auf dem Teigauflagebereich aufliegt. Der erste Seitenbereichabschnitt stützt den Teig seitlich, d. h. im Bereich der kurzen Seiten des rechteckigen Teigs bzw. Teigstücks, der zweite Seitenbereichabschnitt stützt den Teig bzw. das Teigstück oberseitig, d. h. im Bereich seiner freiliegenden Längsseite (Oberseite) des Teigs bzw. Teigstücks.

Unabhängig von einer entsprechenden Führungseinrichtung für den oder die Stützkörper kann die Einrichtung eine Führungseinrichtung umfassen, welche zur Führung, insbesondere zur Querführung, des Teigförderelements entlang der Förderstrecke eingerichtet ist. Eine entsprechende Führungseinrichtung kann einen, insbesondere muldenartig bzw. -förmig, vertieften Aufnahmebereich zur, insbesondere passgenauen, Aufnahme des Teigauflagebereichs umfassen. Eine entsprechende Führungseinrichtung kann ferner wenigstens einen, insbesondere im Vergleich zu dem Aufnahmebereich, d. h. insbesondere zu einem Boden des Aufnahmebereichs, erhöht angeordneten, Auflagebereich zur Auflage des wenigstens einen Seitenbereichs umfassen. Eine entsprechende Führungseinrichtung kann eine U-artige bzw. -U-förmige Querschnittsgeometrie aufweisen.

Hieraus ergibt sich, dass das Teigförderelement (auch unabhängig von dem Vorhandensein einer entsprechenden Führungseinrichtung) querschnittlich betrachtet eine gestufte Geometrie aufweisen kann. Eine querschnittlich betrachtet gestufte Geometrie des Teigförderelements kann aus einer im Vergleich zu dem Teigauflagebereich reduzierten Dicke bzw. Wandstärke des wenigstens einen Seitenbereichs sowie dessen Anordnung bzw. Ausbildung an dem Teigauflagebereich resultieren; der wenigstens eine Seitenbereich ist für den Fall eines querschnittlich betrachtet (im Wesentlichen) rechteckigen Teigauflagebereichs typischerweise im Bereich eines oberen Abschnitts einer kurzen Seite des Teigauflagebereichs angeordnet oder ausgebildet. Analoges gilt für andere Geometrien des Teigauflagebereichs.

Die Erfindung betrifft neben der beschriebenen Einrichtung zur Förderung von Teig entlang einer Förderstrecke auch ein Teigförderelement für eine entsprechende Einrichtung. Sämtliche Erläuterungen im Zusammenhang mit der Einrichtung, d. h. insbesondere sämtliche das Teigförderelement betreffenden Erläuterungen, gelten analog für das Teigförderelement.

Überdies betrifft die Erfindung neben der beschriebenen Einrichtung zur Förderung von Teig entlang einer Förderstrecke auch eine Anlage zur Verarbeitung von Teig. Die Anlage umfasst wenigstens eine wie beschriebene Einrichtung zur Förderung von Teig entlang einer Förderstrecke. Die Einrichtung kann einer dieser in Teigförderrichtung, d. h. typischerweise förderstreckenabwärts, nachgeschaltet angeordneten Teigaufnahme- und/oder Teigverarbeitungseinrichtung, insbesondere einer weiteren Teigformeinrichtung, vorgeschaltet angeordnet sein. Sämtliche Erläuterungen im Zusammenhang mit der Einrichtung gelten analog für die Anlage.

Das Teigförderelement definiert in allen Ausführungen eine Förderstrecke definierter Gesamtlänge. In einer einteiligen Ausführung des Teigförderelements ist die Förderstrecke bzw. deren Gesamtlänge durch den (einzigen) Teigförderelementkörper definiert. In einer mehrteiligen Ausführung des Teigförderelements ist die Förderstrecke bzw. deren Gesamtlänge durch die mehreren gesonderten hintereinander geschaltet angeordneten oder ausgebildeten Teigförderelementkörper definiert.

Die Förderstrecke kann mehrere unterschiedlich funktionalisierte Förderstreckenabschnitte aufweisen, welche im Folgenden einzeln erläutert werden:
Die Förderstrecke kann einen ersten Förderstreckenabschnitt aufweisen. In dem ersten Förderstreckenabschnitt ist zu fördernder Teig, insbesondere in einem Teigauflagebereich des Teigförderelements, auf das Teigförderelement ablegbar. In dem ersten Förderstreckenabschnitt kann ferner ein Trennmittel auf das Teigförderelement aufgebracht werden. Die Aufbringung des Trennmittels erfolgt, wie sich im Weiteren ergibt, typischerweise in einem Bereich des ersten Förderstreckenabschnitts, welcher einem Bereich des ersten Förderstreckenabschnitts, in welchem der Teig auf das Teigförderelement auflegbar bzw. aufgelegt ist, teigförderstreckenabwärts vorgeschaltet angeordnet ist. Der erste Förderstreckenabschnitt kann als Einlauf- bzw. Teigauflageabschnitt bezeichnet bzw. erachtet werden. Wie sich im Weiteren ergibt, ist der erste Förderstreckenabschnitt längenmäßig so bemessen, dass dieser ein ausgiebiges Aufbringen von Trennmittel, d. h. insbesondere ein vollständiges Aufbringen von Trennmittel über die gesamte Breite des Teigförderelements, vor dem eigentlichen Ablegen des Teigs ermöglicht.

Die Einrichtung umfasst sonach typischerweise eine dem ersten Förderstreckenabschnitt zugeordnete Trennmittelaufbringeinrichtung (erste Trennmittelaufbringeinrichtung), welche eingerichtet ist, ein Trennmittel, d. h. z. B. Mehl, auf den ersten Förderstreckenabschnitt bzw. einen Förderstreckenunterabschnitt des ersten Förderstreckenabschnitts aufzubringen. Die Trennmittelaufbringeinrichtung ist sonach derart relativ zu der Förderstrecke bzw. dem ersten Förderstreckenabschnitt angeordnet, dass diese eine Aufbringung eines Trennmittels auf einen Unterabschnitt des ersten Förderstreckenabschnitts, welcher einem den Teigauflagebereich aufweisenden Unterabschnitt des zweiten Förderstreckenabschnitts, d. h. einem entsprechenden Förderstreckenunterabschnitt des ersten Förderstreckenabschnitts, förderstreckenaufwärts vorgelagert angeordnet ist, ermöglicht.

Die (erste) Trennmittelaufbringeinrichtung kann insbesondere eingerichtet sein, das Trennmittel querschnittlich betrachtet über die gesamte Breite des ersten Förderstreckenabschnitts bzw. die gesamte Breite des Teigförderelements im Bereich des ersten Förderstreckenabschnitts aufzubringen. Derart ist, wie erwähnt, die Möglichkeit einer ausgiebigen bzw. vollständigen Aufbringung von Trennmittel auf das Teigförderelement, welche sich positiv auf die spätere Teigförderung und Teigformung des Teigs auswirkt.

Zweckmäßig ist der Teig in einem Bereich des ersten Förderstreckenabschnitts auf den ersten Förderstreckenabschnitt ablegbar oder abgelegt, in welchem ein den Teig, insbesondere U-artig bzw. U-förmig, umgebender Teigformungsbereich wenigstens teilweise ausgebildet ist. Der Teig wird sonach zweckmäßig in einem Bereich des ersten Förderstreckenabschnitts abgelegt, in welchen das Teigförderelement bereits eine im Vergleich zu seiner ursprünglichen ebenen Querschnittsgeometrie veränderte Querschnittsgeometrie aufweist. Diese bereits in dem ersten Förderstreckenabschnitt erfolgende teilweise Änderung der Querschnittsgeometrie des Teigförderelements in dem ersten Förderstreckenabschnitt steht typischerweise im Zusammenhang mit der erwähnten Ausbildung eines entsprechenden Teigformungsbereichs. Das Teigförderelement wird sonach bereits in dem ersten Förderstreckenabschnitt in seiner Querschnittsgeometrie verändert. Insbesondere wird das Teigförderelement durch Bewegen von relativ zu einem Teigauflagebereich des Teigförderelements bewegbar angeordneten oder ausgebildeten Seitenbereichen des Teigförderelements relativ zu dem Teigauflagebereich in wenigstens eine zwischen einer ersten und einer zweiten Position liegende Zwischenposition, in welcher das Teigförderelement querschnittlich betrachtet eine schüsselartige bzw. -förmige Geometrie aufweist, überführt. Der Teig wird sonach zweckmäßig in einem Bereich des ersten Förderstreckenabschnitts auf das Teigförderelement abgelegt, in welchem bereits ein den Teig, insbesondere U-artig bzw. U-förmig, umgebender Teigformungsbereich wenigstens teilweise ausgebildet, mithin eine gewisse "Schüsselung" des Teigförderelements gegeben ist. Dies hat Vorteile für die Aufbringung von Trennmittel an seitliche Bereiche des Teigs - dies gilt insbesondere für besonders fließfähige bzw. weiche Teige. Das Ablegen des Teigs in einem Bereich des ersten Förderstreckenabschnitts, in welchem ein den Teig, insbesondere U-artig bzw. U-förmig, umgebender Teigformungsbereich wenigstens teilweise ausgebildet ist, wirkt sich zudem positiv auf die Teigförderung und weitere Teigformung aus; dies ergibt sich insbesondere aus dem Umstand, dass der Teig - auch dies gilt insbesondere für besonders fließfähige bzw. weiche Teige - keine Möglichkeit hat, seitlich zu zerfließen.

In einem dem ersten Förderstreckenabschnitt förderstreckenabwärts nachgeschaltet angeordneten zweiten Förderstreckenabschnitt ist der entlang der Förderstrecke zu fördernde bzw. geförderte Teig in seiner Querschnittsgeometrie veränderbar. Der zweite Förderstreckenabschnitt kann als Teigformungsabschnitt bezeichnet bzw. erachtet werden. Aufgrund dem bereits in dem ersten Förderstreckenabschnitt erfolgenden bzw. erfolgten Aufbringen von Trennmittel und Ablegen von Teig auf das Teigförderelement ist der in dem zweiten Förderstreckenabschnitt geförderte Teig bereits auf ein ausgiebig, d. h. insbesondere vollständig, mit Trennmittel versehenes Teigförderelement abgelegt. Wie sich im Weiteren ergibt, kann die Formung des Teigs in dem zweiten Förderstreckenabschnitt insbesondere durch eine weitere winklige, d. h. insbesondere rechtwinklige, Ausrichtung von relativ zu einem Teigauflagebereich des Teigförderelements bewegbar angeordneten oder ausgebildeten Seitenbereichen des Teigförderelements relativ zu dem Teigauflagebereich des Teigförderelements erfolgen. Wie sich ebenso im Weiteren ergibt, resultiert die Teigformung zweckmäßig in einer (weitgehend) rechteckigen Querschnittsgeometrie des Teigs. Es wurde bereits erwähnt, dass eine entsprechende Bewegung des oder der Seitenbereiche zweckmäßig bereits zumindest teilweise in dem ersten Förderstreckenabschnitt erfolgt.

In einem dem zweiten Förderstreckenabschnitt förderstreckenabwärts nachgeschaltet angeordneten dritten Förderstreckenabschnitt ist der zu fördernde bzw. geförderte, in seiner Querschnittsgeometrie veränderte Teig in Richtung eines Übergabebereichs, in welchem der zu fördernde bzw. geförderte Teig auf eine der Einrichtung förderstreckenabwärts nachgeschaltet anordenbare oder angeordnete Teigverarbeitungseinrichtung übergebbar ist, förderbar. Der dritte Förderstreckenabschnitt kann als Auslauf- bzw. Übergabeabschnitt bezeichnet bzw. erachtet werden. Eine entsprechende der Einrichtung förderstreckenabwärts nachgeschaltet anordenbare bzw. angeordnete Teigverarbeitungseinrichtung bildet typischerweise keinen Bestandteil der Einrichtung. Betrachtet man die Einrichtung als funktionalen Bestandteil einer übergeordneten Anlage zur Verarbeitung von Teig, kann eine entsprechende Teigverarbeitungseinrichtung z. B. einen der Einrichtung funktional nachgeschaltet angeordneten weiteren Bestandteil der Anlage darstellen.

Jeder der genannten Förderstreckenabschnitte kann wiederum wenigstens zwei Förderstreckenunterabschnitte umfassen, welche gegebenenfalls unterschiedliche Unterfunktionen der übergeordneten Funktion des jeweiligen Förderstreckenabschnitts innehaben. Dies kann beispielhaft anhand des ersten Förderstreckenabschnitts erläutert werden, welcher in zwei Förderstreckenunterabschnitte unterteilt sein kann, wobei in einem ersten Förderstreckenunterabschnitt eine Aufbringung von Trennmittel auf das Teigförderelement erfolgen kann.

In diesem Zusammenhang ist zu erwähnen, dass der erste Förderstreckenabschnitt wenigstens zwei unterschiedlich ausgerichtete Förderstreckenunterabschnitte aufweisen kann, wobei ein erster Förderstreckenunterabschnitt winklig geneigt relativ zu wenigstens einem, dem ersten Förderstreckenunterabschnitt förderstreckenabwärts nachgeschaltet angeordneten zweiten Förderstreckenunterabschnitt angeordnet ist. Die winklig geneigte Ausrichtung des wenigstens einen ersten Förderstreckenunterabschnitts relativ zu dem zweiten Förderstreckenunterabschnitt ist durch eine winklig geneigte Ausrichtung wenigstens eines Teigförderelementabschnitts relativ zu wenigstens einem weiteren Teigförderelementabschnitt realisierbar und ermöglicht eine kompakte(re) Bauform der Einrichtung. Analoges kann prinzipiell für andere Förderstreckenabschnitte gelten. Das Auflegen des Teigs in dem ersten Förderstreckenabschnitts kann - unabhängig von dessen Ausrichtung - in dem zweiten Förderstreckenunterabschnitt, das Aufbringen von Trennmittel kann - unabhängig von dessen Ausrichtung - in dem ersten Förderstreckenunterabschnitt erfolgen.

Die Einrichtung umfasst typischerweise eine dem ersten Förderstreckenabschnitt zugeordnete Teigablegeeinrichtung, insbesondere eine Teigportioniereinrichtung, welche zum kontinuierlichen oder diskontinuierlichen Ablegen von Teig, insbesondere von definierten Teigportionen, auf den ersten Förderstreckenabschnitt eingerichtet ist. Die Teigablegeeinrichtung bzw. die Teigportioniereinrichtung ist typischerweise derart relativ zu der Förderstrecke bzw. dem ersten Förderstreckenabschnitt angeordnet, dass diese ein Ablegen von Teig auf einen Unterbereich des ersten Förderstreckenabschnitts, d. h. z. B. dem erwähnten zweiten Förderstreckenunterabschnitt, welcher einem einen Trennmittelaufbringbereich aufweisenden Unterabschnitt, d. h. z. B. dem ersten Förderstreckenunterabschnitt, des ersten Förderstreckenabschnitts förderstreckenabwärts nachgelagert angeordnet ist, ermöglicht.

Die Teigablegeeinrichtung bzw. die Teigportioniereinrichtung kann z. B. als Sternwalzenportioniereinrichtung ausgebildet sein oder eine solchen umfassen.

Die Teigablegeeinrichtung bzw. die Teigportioniereinrichtung kann einen Teigausgabereich umfassen, welcher sich längs des ersten Förderstreckenabschnitts erstreckend angeordnet oder ausgebildet ist. Die Teigablegeeinrichtung bzw. die Teigportioniereinrichtung kann sonach einen, z. B. durch eine sich in Längsrichtung des Teigförderelements erstreckende Teigausgabeöffnung gebildeten, Teigausgabebereich umfassen, welcher sich positiv auf Teigförderung und Teigformung auswirken kann.

Die Einrichtung umfasst typischerweise eine dem zweiten Förderstreckenabschnitt zugeordnete, wenigstens ein Teigformelement umfassende Teigformeinrichtung. Die Teigformeinrichtung ist eingerichtet, eine, insbesondere vertikal ausgerichtete, Kraft auf den Teig auszuüben, um den Teig definiert zu verformen. Derart kann die erwähnte Änderung der Querschnittsgeometrie bzw. Formung des Teigs bewirkt bzw. unterstützt werden. Durch die beschriebene ausgiebige Aufbringung von Trennmittel über die erste und/oder zweite Trennmittelaufbringeinrichtung ist die Möglichkeit eines Anhaftens des Teigs auch an dem Teigformelement verhindert bzw. zumindest erheblich reduziert.

Die Teigformeinrichtung kann z. B. als Teigformrolleinrichtung bzw. als Teigformwalzeinrichtung ausgebildet sein oder eine solche umfassen. Bei einem Teigformelement kann es sich demnach z. B. um eine Teigformrolle oder um eine Teigformwalze handeln.

Um eine ausgiebige Aufbringung von Trennmittel - hierbei kann es sich beispielsweise um einen Feststoff, wie z. B. Mehl, und/oder um eine Flüssigkeit, wie z. B. Öl, handeln - auf das Teigförderelement, insbesondere vor dem Auflegen des Teigs auf das Teigförderelement zu ermöglichen, kann der erste Förderstreckenabschnitt, wie bereits angedeutet, längenmäßig besonders bemessen sein.

Der erste Förderstreckenabschnitt kann z. B. eine Länge von wenigstens 33%, insbesondere mehr als 33%, bevorzugt wenigstens 40%, weiter bevorzugt mehr als 45%, weiter bevorzugt wenigstens 50%, weiter bevorzugt mehr als 55%, weiter bevorzugt mehr als 60%, der Gesamtlänge der Förderstrecke aufweisen. Der erste Förderstreckenabschnitt kann sonach z. B. eine Länge in einem Bereich zwischen 33 % und 70%, insbesondere zwischen 40% und 70%, bevorzugt zwischen 45% und 70%, weiter bevorzugt zwischen 50% und 70%, weiter bevorzugt zwischen 55% und 70%, weiter bevorzugt zwischen 60% und 70%, weiter bevorzugt zwischen 65% und 70%, der Gesamtlänge der Förderstrecke aufweisen.

Durch diese im Vergleich zu bekannten Förderstrecken, wie z. B. der aus der eingangs genannten EP 3 066 928 A1 Bekannten, deutlich längere Ausführung des ersten Förderstreckenabschnitts ist die Möglichkeit einer ausgiebigen Aufbringung von Trennmittel auf das Teigförderelement vor dem eigentlichen Auflegen des Teigs auf das Teigförderelement gewährleistet, welche sich positiv auf die (weitere) Teigförderung und Teigformung auswirkt. Der erste Förderstreckenabschnitt bzw. ein Förderstreckenunterabschnitt des ersten Förderstreckenabschnitts kann, insbesondere auch über seine Breite, vollständig mit Trennmittel versehen werden. Insbesondere ist ein ausgiebiges Aufbringen von Trennmittel über die gesamte Breite des Teigförderelements vor dem eigentlichen Ablegen des Teigs auf dem Teigförderelement ermöglicht, sodass der in dem ersten Förderstreckenabschnitt auf dem Teigförderelement, d. h. insbesondere in einem Teigformungsbereich des Teigförderelements, ablegbare Teig bereits auf ein ausgiebig bzw. vollständig mit Trennmittel versehenes Teigförderelement ablegbar ist. Das Trennmittel kann sonach derart aufgebracht werden, dass das Trennmittel den auf dem Teigförderelement aufliegenden Teig zumindest im Bereich möglicher Kontaktbereiche mit dem Teigförderelement (möglichst) vollständig umgibt.

Aus der besonderen längenmäßigen Abmessung des ersten Förderstreckenabschnitts kann sich ergeben, dass der erste Förderstreckenabschnitt eine größere Länge als der zweite und/oder der dritte Förderstreckenabschnitt aufweisen kann.

Der zweite und der dritte Förderstreckenabschnitt können gemeinsam eine Länge von weniger als 50% der Gesamtlänge der Förderstrecke aufweisen. Die sich aus der Summe der Länge des zweiten und des dritten Förderstreckenabschnitts ergebende Gesamtlänge des zweiten und des dritten Förderstreckenabschnitts kann sonach unterhalb von 50% der Gesamtlänge der Förderstrecke liegen. Auch derart ist gewährleistet, dass der erste Förderstreckenabschnitt eine Länge aufweist, welche eine wie beschriebene ausgiebige Aufbringung von Trennmittel ermöglicht.

Der zweite und der dritte Förderstreckenabschnitt können längenmäßig gleich oder unterschiedlich bemessen sein; der zweite und der dritte Förderstreckenabschnitt können sonach die gleiche Länge oder unterschiedliche Längen aufweisen. Durch eine flexible Anpassung der Längen des zweiten und dritten Förderstreckenabschnitts ist, mit der Maßgabe, dass der erste Förderstreckenabschnitt eine Länge von wenigstens 33% der Gesamtlänge der Förderstrecke aufweist, eine flexible Anpassungsmöglichkeit der jeweiligen Förderstreckenabschnitte im Hinblick auf konkrete bauliche Anforderungen an die Einrichtung gegeben.

Die Einrichtung kann eine dem zweiten Förderstreckenabschnitt zugeordnete Trennmittelaufbringeinrichtung (zweite Trennmittelaufbringeinrichtung) umfassen, welche eingerichtet ist, ein Trennmittel, insbesondere Mehl, auf den zweiten Förderstreckenabschnitt, insbesondere auf freiliegende Bereich von entlang des zweiten Förderstreckenabschnitts geförderten Teigs, und/oder auf eine dem zweiten Förderstreckenabschnitt zugeordnete, wenigstens ein Teigformelement, insbesondere in Form einer Teigformrolle oder einer Teigformwalze, umfassende Teigformeinrichtung aufzubringen. Durch diese Trennmittelaufbringeinrichtung kann gewährleitstet werden, dass in dem zweiten Förderstreckenabschnitt, in welchem, wie erwähnt, eine entsprechende Änderung der Querschnittsgeometrie des Teigs bzw. eine Formung des Teigs erfolgt, stets eine ausreichende Menge an Trennmittel vorhanden ist.

Die (zweite) Trennmittelaufbringeinrichtung kann eingerichtet sein, das Trennmittel querschnittlich betrachtet über die gesamte Breite des zweiten Förderstreckenabschnitts, insbesondere die gesamte Breite des freiliegenden Bereichs des entlang des zweiten Förderstreckenabschnitts geförderten Teigs, und/oder die gesamte Breite des Teigformelements aufzubringen. Derart ist die Möglichkeit einer ausgiebigen bzw. vollständigen Aufbringung von Trennmittel auf das Teigförderelement bzw. das Teigformelement während der Änderung der Querschnittsgeometrie des Teigs bzw. während der Formung des Teigs gewährleistet, welche sich positiv auf die Formung und weitere Förderung des Teigs auswirkt.

Das Aufbringen des Trennmittels vermittels der ersten und/oder der zweiten Trennmittelaufbringeinrichtung kann je nach Art des Trennmittels, d. h. insbesondere nach Art dessen Aggregatszustands, z. B. durch Blasen, Rieseln, Gießen, Schütten, etc. erfolgen. Die erste und/oder zweite Trennmittelaufbringeinrichtung kann entsprechend z. B. als Blas-, Riesel-, Gieß- oder Schütteinrichtung ausgebildet sein bzw. eine solche umfassen.

Die Erfindung betrifft neben der beschriebenen Einrichtung zur Förderung von Teig entlang einer Förderstrecke auch eine Anlage zur Verarbeitung von Teig. Die Anlage umfasst wenigstens eine wie beschriebene Einrichtung zur Förderung von Teig entlang einer Förderstrecke. Die Einrichtung kann einer dieser in Teigförderrichtung, d. h. typischerweise förderstreckenabwärts, nachgeschaltet angeordneten Teigaufnahme- und/oder Teigverarbeitungseinrichtung, insbesondere einer weiteren Teigformeinrichtung, vorgeschaltet angeordnet sein. Sämtliche Erläuterungen im Zusammenhang mit der Einrichtung gelten analog für die Anlage.

Überdies betrifft die Erfindung ein Verfahren zur Förderung von Teig entlang einer Förderstrecke. Verfahrensgemäß wird eine wie beschriebene Förderstrecke verwendet, welche einen ersten Förderstreckenabschnitt, in welchem entlang der Förderstrecke zu fördernder Teig auf das Teigförderelement abgelegt wird, einen einen dem ersten Förderstreckenabschnitt förderstreckenabwärts nachgeschaltet angeordneten zweiten Förderstreckenabschnitt, in welchem entlang der Förderstrecke zu fördernder oder geförderter Teig auf das Teigförderelement abgelegt und in seiner Querschnittsgeometrie verändert wird, und einen dem zweiten Förderstreckenabschnitt förderstreckenabwärts nachgeschaltet angeordneten dritten Förderstreckenabschnitt, in welchem geförderter, in seiner Querschnittsgeometrie veränderter Teig in Richtung eines Übergabebereichs, in welchem der zu fördernde oder geförderte Teig auf eine der Einrichtung förderstreckenabwärts nachgeschaltet anordenbare oder angeordnete Teigverarbeitungseinrichtung übergebbar ist, gefördert wird. Verfahrensgemäß erfolgt sonach eine Aufbringung von Trennmittel und ein Auflegen von Teig in dem ersten Förderstreckenabschnitt, ein Formen des Teigs in dem zweiten Förderstreckenabschnitt und eine Weiterförderung des geformten Teigs in dem dritten Förderstreckenabschnitt. Sämtliche Erläuterungen im Zusammenhang mit der Einrichtung gelten analog für das Verfahren.

Die Erfindung ist anhand von Ausführungsbeispielen in den Zeichnungen nochmals erläutert. Dabei zeigen:
Fig. 1 eine Prinzipdarstellung einer Einrichtung zur Förderung von Teig entlang einer Förderstrecke gemäß einem Ausführungsbeispiel;
Fig. 2 eine quergeschnittene Ansicht gemäß den Schnittlinien II - II der in Fig. 1 gezeigten Einrichtung;
Fig. 3 eine quergeschnittene Ansicht gemäß den Schnittlinien III - III der in Fig. 1 gezeigten Einrichtung;
Fig. 4 - 10 je eine Prinzipdarstellung eines Teigförderelements gemäß einem weiteren Ausführungsbeispiel;
Fig. 11 eine Seitenansicht einer Einrichtung gemäß einem weiteren Ausführungsbeispiel; und
Fig. 12 eine Aufsichtsansicht auf die in Fig. 11 gezeigte Einrichtung.

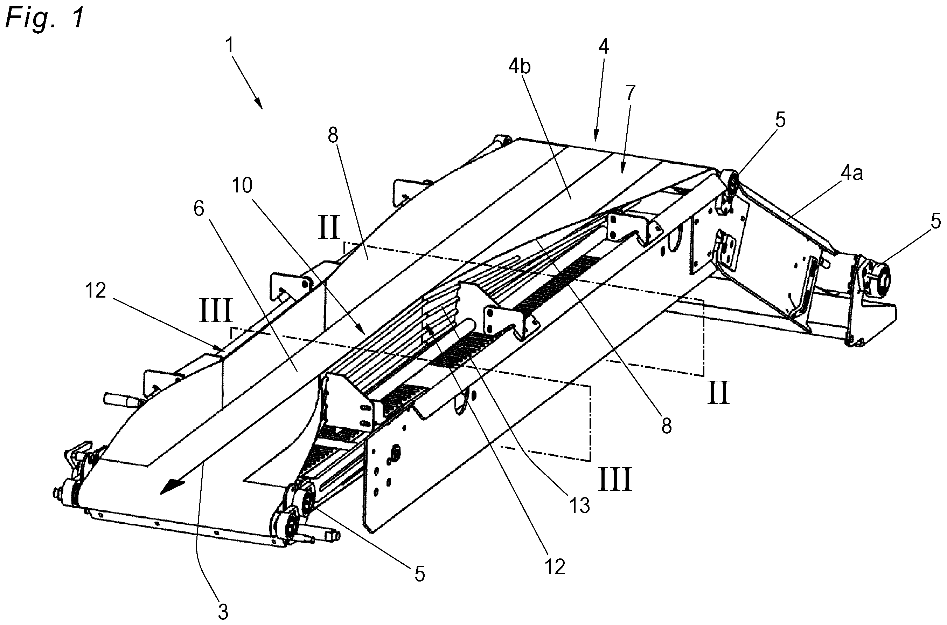

Fig. 1 zeigt eine Prinzipdarstellung einer Einrichtung 1 zur Förderung von Teig 2 entlang einer durch den ebenso die Teigförderrichtung anzeigenden Pfeil angedeuteten Förderstrecke 3 gemäß einem Ausführungsbeispiel in einer perspektivischen Ansicht. Vermittels der auch als Teigfördereinrichtung zu bezeichnenden bzw. zu erachtenden Einrichtung 1 lassen sich kontinuierlich oder diskontinuierlich erzeugte Teigportionen bzw. -stücke entlang der Förderstrecke 3 fördern.

Die Einrichtung 1 kann einen Bestandteil einer übergeordneten Anlage (nicht gezeigt) zur Verarbeitung von Teig 2 bilden bzw. einer solchen zugeordnet sein.

Die Einrichtung 1 umfasst ein die Förderstrecke 3 definierendes längliches Teigförderelement 4. In dem in Fig. 1 gezeigten Ausführungsbeispiel ist das Teigförderelement 4 beispielhaft sich abschnittsweise winklig geneigt bezüglich einer horizontalen Referenzebene erstreckend ausgebildet ist; das Teigförderelement 4 weist sonach einen sich winklig geneigt bezüglich der horizontalen Referenzebene erstreckend ausgebildeten ersten Teigförderelementabschnitt 4a und einen diesem förderstreckenabwärts nachgeschaltet angeordneten, sich parallel bezüglich der horizontalen Referenzebene erstreckend ausgebildeten zweiten Teigförderelementabschnitt 4b auf. Wenngleich in den Fig. nicht gezeigt, ist es grundsätzlich auch möglich, dass das Teigförderelement 4 sich vollständig winklig geneigt oder parallel bezüglich der horizontalen Referenzebene erstreckend ausgebildet ist.

In dem in Fig. 1 gezeigten Ausführungsbeispiel ist das Teigförderelement 4 beispielhaft durch einen ein Förderband bildenden bandartigen bzw. -förmigen Teigförderelementkörper und somit als Teigförderband ausgebildet. Gleichermaßen wäre jedoch eine Ausbildung des Teigförderelements 4 durch einen eine Förderkette bildenden kettenartigen bzw. -förmigen Teigförderelementkörper denkbar.

Anhand von Fig. 1 ist ersichtlich, dass das Teigförderelement 4 um mehrere rollenartige bzw. - förmige Umlenkkörper 5 umlaufend angeordnet bzw. ausgebildet ist. Die Einrichtung 1 umfasst sonach mehrere rollenartige bzw. -förmige Umlenkkörper 5, um welche das Teigförderelement 4 umlaufend angeordnet oder ausgebildet ist. Die Umlenkkörper 5 können an einer, insbesondere rahmenartigen bzw. -förmigen, Tragstruktur (nicht gezeigt) der Einrichtung 1 angeordnet oder ausgebildet sein.

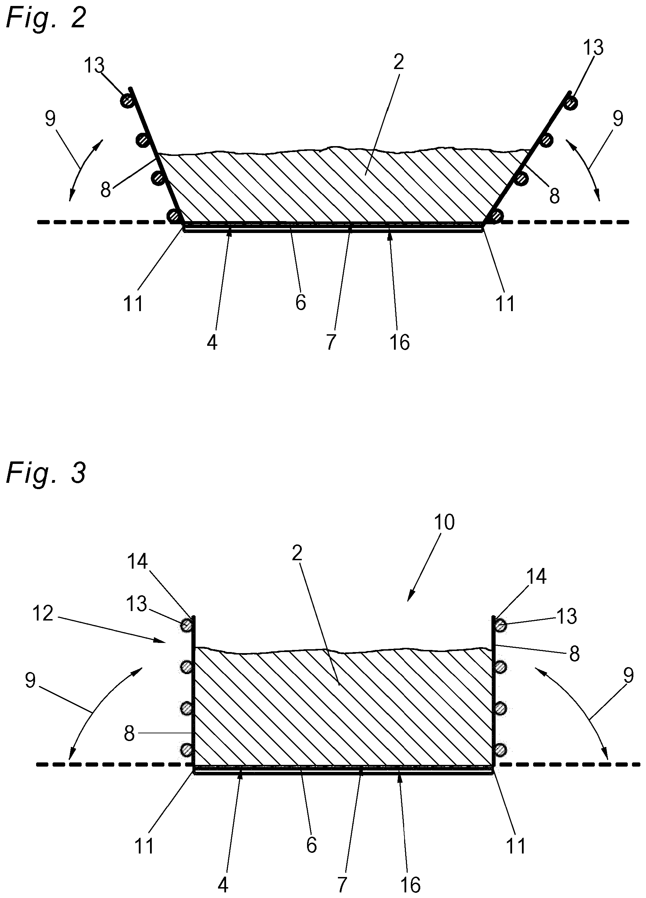

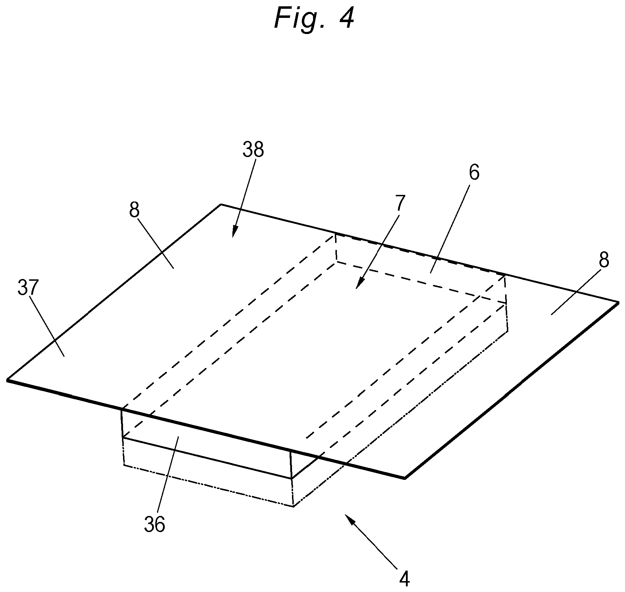

Das Teigförderelement 4 umfasst einen eine Auflagefläche 7 für vermittels der Einrichtung 1 förderbaren oder zu fördernden Teigs 2 bildenden bzw. umfassenden Teigauflagebereich 6 und zwei sich in Längsrichtung des Teigförderelements 4 seitlich entlang des Teigauflagebereichs 6 erstreckenden Seitenbereiche 8. Anhand der in den Fig. 2, 3 gezeigten quergeschnittenen sowie der in den Fig. 4 - 10 gezeigten perspektivischen Ansichten ist ersichtlich, dass der Teigauflagebereich 6 querschnittlich betrachtet einen mittleren Bereich, d. h. den Mittelbereich, des Teigförderelements 4 bildet.

Die Seitenbereiche 8 sind sich in Längsrichtung des Teigförderelements 4 seitlich entlang des Teigauflagebereichs 6 erstreckend an dem bzw. im Bereich des Teigauflagebereichs 6 angeordnet bzw. ausgebildet. Die Seitenbereiche 8 können form-, kraft- und/oder stoffschlüssig an einer jeweiligen Längsseitenkante des Teigauflagebereichs 6 an dem Teigauflagebereich 6 angebunden sein; ein erster Seitenbereich 8 ist sich in Längsrichtung des Teigförderelements 4 seitlich entlang einer ersten Längsseitenkante des Teigauflagebereichs 6 erstreckend an dem Teigauflagebereich 6 angeordnet bzw. ausgebildet und ein zweiter Seitenbereich 8 ist sich in Längsrichtung des Teigförderelements 4 seitlich entlang einer zweiten Längsseitenkante des Teigauflagebereichs 6 erstreckend an dem Teigauflagebereich 6 angeordnet bzw. ausgebildet ist.

Anhand der Fig. 2, 3 ist ersichtlich, dass die Seitenbereiche 8 jeweils bewegbar, d. h. wie durch die Doppelpfeile 9 in den Fig. 2, 3 angedeutet, schwenkbewegbar, relativ zu dem Teigauflagebereich 6 an dem Teigauflagebereich 6 angeordnet bzw. ausgebildet sind. Die Seitenbereiche 8 können kann sonach in unterschiedliche Schwenkstellungen und damit unterschiedliche Ausrichtungen relativ zu dem Teigauflagebereich 6 bewegt werden.

Durch eine jeweilige Schwenkbewegung der Seitenbereiche 8 relativ zu dem Teigauflagebereich 6 kann ein den vermittels des Teigförderelements 4 förderbaren oder zu fördernden Teig 2 entlang der Förderstrecke 3 querschnittlich betrachtet zumindest abschnittsweise seitlich, d. h. insbesondere U-artig bzw. U-förmig, umgebender Teigformungsbereich 10 (vgl. insbesondere Fig. 3, 11, 12) gebildet werden. Die Seitenbereiche 8 sind sonach insbesondere zur Bildung eines entsprechenden Teigformungsbereichs 10 schwenkbewegbar relativ zu dem Teigauflagebereich 6 angeordnet bzw. ausgebildet.

Konkret sind die Seitenbereiche 8 in den in den Fig. gezeigten Ausführungsbeispielen jeweils zwischen einer in den Fig. 2, 3 strichliert angedeuteten ersten Schwenkstellung, in welcher die Seitenbereiche 8 querschnittlich betrachtet (im Wesentlichen) parallel zu dem Teigauflagebereich 6 angeordnet bzw. ausgerichtet sind, insbesondere derart, dass sich querschnittlich betrachtet eine (im Wesentlichen) einheitlich ebene Oberfläche des Teigförderelements 4 ergibt, und einer in Fig. 3 gezeigten zweiten Schwenkstellung, in welcher die Seitenbereiche 8 querschnittlich betrachtet winklig, insbesondere rechtwinklig, zu dem Teigauflagebereich 6 angeordnet bzw. ausgerichtet sind insbesondere derart, dass der den Teig 2 querschnittlich betrachtet zumindest abschnittsweise seitlich, insbesondere U-artig bzw. U-förmig, umgebende Teigformungsbereich 10 gebildet ist, und umgekehrt, verschwenkbar. Anhand von Fig. 2 ist ersichtlich, dass die Seitenbereiche 8 auch in zwischen der ersten und der zweiten Schwenkstellung liegende Zwischenschwenkstellungen verschwenkbar sind.

Die Anordnung bzw. Ausbildung der Seitenbereiche 8 an dem Teigauflagebereich 6 kann z. B. durch eine gelenkartige bzw. -förmige oder eine scharnierartige bzw. -förmige Anbindung der Seitenbereiche 8 an dem Teigauflagebereich 6 realisiert sein. Die Seitenbereiche 8 können z. B. durch ein Gelenk- oder Scharnierelemente 11 an dem Teigauflagebereiche 6 angebunden sein. Für den Fall einer stoffschlüssigen Anbindung der Seitenbereiche 8 an dem Teigauflagebereich 6, welche z. B. bei einer einstückigen Ausführung der Seitenbereiche 8 und des Teigauflagebereichs 6 gegeben sein kann, können entsprechende Gelenk- oder Scharnierelemente 11 z. B. durch ein Filmscharnier gebildet sein oder ein solches umfassen.

In den Fig. 1 und 3 ist ferner eine Stützeinrichtung 12 gezeigt, welche zur Stützung und/oder Stabilisierung der Seitenbereiche 8 in der zweiten Schwenkstellung eingerichtet ist. Die Stützeinrichtung 12 umfasst eine Mehrzahl an sich in Längsrichtung des Teigförderelements 4 erstreckend parallel angeordnete bzw. ausgebildete Stützkörper 13, welche jeweils einen den jeweiligen Seitenbereich 8 in der zweiten Schwenkstellung stützenden Stützkörperabschnitt 14 umfassen. Die Stützkörper 13 sind in dem in Fig. 1 - 3 gezeigten Ausführungsbeispiel jeweils als Stützstrebe ausgeführt.

Wenngleich in den Fig. nicht gezeigt, wäre es jedoch auch denkbar, Stützkörper 13 in Form von Stützkeilen vorzusehen.

Das Teigförderelement 4 weist im Bereich des Teigauflagebereichs 6 bzw. in dem Teigauflagebereich 6 ein biegesteifes Materialverhalten und im Bereich der Seitenbereiche 8 bzw. in den Seitenbereichen 8 ein elastisch-dehnbares Materialverhalten auf. Das Teigförderelement 4 weist sonach lokal unterschiedliche mechanische Eigenschaften und somit ein lokal unterschiedliches Materialverhalten auf, indem es im Bereich des Teigauflagebereichs 6 bzw. in dem Teigauflagebereich 6 gezielt biegesteif bzw. hart und im Bereich der Seitenbereiche bzw. in den Seitenbereichen 8 gezielt elastisch-dehnbar bzw. weich ausgeführt ist. Derart ist ein, insbesondere im Hinblick auf Teigförderung und Teigformung, verbessertes Teigförderelement 4 und somit eine verbesserte Einrichtung gegeben, als das Teigförderelement 4 in dem Bereich des Teigauflagebereichs 6 bzw. in dem Teigauflagebereich 6 ein gewünschtes biege- bzw. quersteifes und somit im Allgemeinen steifes bzw. hartes Materialverhalten und im Bereich der Seitenbereiche 8 bzw. in den Seitenbereichen 8 ein gewünschtes elastisch-dehnbares und somit im Allgemeinen weiches Materialverhalten aufweist. Diese gezielte Kombination von unterschiedlichen mechanischen Eigenschaften bzw. unterschiedlichem Materialverhalten im Bereich des Teigauflagebereichs 6 bzw. in dem Teigauflagebereich 6 und im Bereich der Seitenbereiche 8 bzw. in den Seitenbereichen 8 wirkt sich positiv auf Teigförderung und Teigformung aus.

Das biegesteife Materialverhalten im Bereich des Teigauflagebereichs 6 bzw. in dem Teigauflagebereich 6 ist deshalb zweckmäßig, als auf den Teigauflagebereich 6 bei Teigförderung und Teigformung erhebliche Kräfte, d. h. insbesondere Biege- bzw. Druckkräfte, wirken können, welche durch das biegesteife Materialverhalten des Teigförderelements 4 im Bereich des Teigauflagebereichs 6 aufgenommen werden können. Der Teig 2 kann sonach auf einem im Bereich des Teigauflagebereichs 6 mechanisch stabil ausgeführten Teigförderelement 4 abgelegt, gefördert und geformt werden, was eine reproduzierbare geometrisch definierte Teigformung ermöglicht. Es besteht aufgrund der lokal biegesteifen Ausführung keine oder eine weitaus reduziertere Möglichkeit der Durchbiegung des Teigförderelements 4 im Bereich des Teigauflagebereichs 6. Die Biegesteifigkeit ist nicht so hoch gewählt, dass eine Umlenkung des Teigförderelements 5 an den Umlenkkörpern 5 nicht mehr möglich ist.

Das elastisch-dehnbare Materialverhalten im Bereich der Seitenbereiche 8 bzw. in den Seitenbereichen 8 ist deshalb zweckmäßig, als auf die Seitenbereiche 8 bei einer entsprechenden Bewegung, d. h. insbesondere einer entsprechenden Schwenkbewegung, relativ zu dem Teigauflagebereich 6 erhebliche Kräfte, d. h. insbesondere Dehn- bzw. Zugkräfte, wirken können, welche durch das elastisch-dehnbare Materialverhalten des Teigförderelements 4 im Bereich der Seitenbereiche 8 aufgenommen werden können. Eine durch eine Bewegung der Seitenbereiche 8 relativ zu dem Teigauflagebereich 6 herbeigeführte Dehnung der Seitenbereiche 8 ist sonach aufgrund des elastisch-dehnbaren Materialverhaltens ohne Gefahr einer Schädigung des Teigförderelements 4 möglich. Das elastisch-dehnbare Materialverhalten kann zudem ein elastisches Rückstellverhalten der Seitenbereiche 8 von einem gedehnten Zustand, welcher typischerweise bei entsprechender Bewegung der Seitenbereiche 8 zu dem Teigauflagebereich 6 gegeben ist, in einen weniger oder ungedehnten Zustand ermöglichen.

Das unterschiedliche Materialverhalten im Bereich des Teigauflagebereichs 6 bzw. in dem Teigauflagebereich 6 und im Bereich der Seitenbereiche 8 bzw. in den Seitenbereichen 8 kann z. B. durch unterschiedliche Materialien bzw. Materialstrukturen zur Ausbildung des Teigauflagebereichs 6 und der Seitenbereiche 8, d. h. unterschiedliche Materialpaarungen bzw. Materialstrukturpaarungen, herbeigeführt sein. Mithin kann ein biegesteifes bzw. hartes Material bzw. eine biegesteife bzw. harte Materialstruktur im Bereich des Teigauflagebereichs 6 bzw. in dem Teigauflagebereich 6 und ein elastisch-dehnbares bzw. weiches Material bzw. eine elastisch-dehnbare bzw. weiche Materialstruktur im Bereich der Seitenbereiche 8 bzw. in den Seitenbereichen 8 verwendet werden.

Alternativ oder ergänzend ist es z. B. auch denkbar, durch baulich-konstruktive Maßnahmen lokal unterschiedliche mechanische Eigenschaften und somit ein lokal unterschiedliches Materialverhalten zu erzeugen. Im Bereich des Teigauflagebereichs 6 bzw. in dem Teigauflagebereich 6 kann z. B. eine erhöhte Dicke bzw. Wandstärke des jeweiligen Materials bzw. der jeweiligen Materialstruktur vorgesehen und/oder das jeweilige Material bzw. die jeweilige Materialstruktur mit Verstärkungselementen, wie z. B. Rippen, versehen sein. Im Bereich der Seitenbereiche 8 bzw. in den Seitenbereichen 8 kann z. B. eine erniedrigte Dicke bzw. Wandstärke des jeweiligen Materials bzw. der jeweiligen Materialstruktur vorgesehen und/oder das jeweilige Material bzw. die jeweilige Materialstruktur mit Schwächungselementen, wie z. B. Aussparungen, versehen sein. Dies gilt insbesondere auch für die Verwendung von (chemisch) ähnlichen bzw. gleichen Materialien zur Ausbildung des Teigförderelements 4 im Bereich des Teigauflagebereichs 6 und der Seitenbereiche 8.

Wie im Zusammenhang mit den in den Fig. 4 - 10 gezeigten Ausführungsbeispielen näher erläutert, ist das Teigförderelement 4 im Bereich des Teigauflagebereichs 6 bzw. in dem Teigauflagebereich 6 zumindest abschnittsweise, insbesondere vollständig, durch eine biegesteife Versteifungsstruktur 16 zur Biege- bzw. Querversteifung des Teigauflagebereichs 6 ausgebildet oder umfasst wenigstens eine solche.

In dem in Fig. 4 in einer perspektivischen Ansicht gezeigten Ausführungsbeispiel ist die Versteifungsstruktur 16 durch ein biegesteifes Material oder eine biegesteife Materialstruktur gebildet. Als biegesteife Materialien kommen z. B. biegesteife Kunststoffmaterialien in Betracht. Insbesondere sind, gegebenenfalls mit Verstärkungsfasern, wie z. B. Glasfasern, versehene, biegesteife duro- oder thermoplastische Kunststoffmaterialien denkbar. Als biegesteife Materialstrukturen kommen z. B. Anordnungen und/oder Ausrichtungen von Materialien bzw. aus solchen gebildeten Bauelemente in Betracht, welche in einer Biegesteifigkeit resultieren. Denkbar sind z. B. gitter- oder rippenartige Anordnungen bzw. Ausrichtungen entsprechender Bauelemente.

Die Versteifungsstruktur 16 ist in dem in Fig. 4 gezeigten Ausführungsbeispiel konkret durch einen biegesteifen Trägerkörper 36 gebildet, wobei an und/oder auf dem Trägerkörper 36 ein die Seitenbereiche 8 bildendes elastisch-dehnbares Material 37 bzw. eine die Seitenbereiche 8 bildende elastisch-dehnbare Materialstruktur angebracht ist. Das elastisch-dehnbare Material 37 bzw. die elastisch-dehnbare Materialstruktur kann z. B. als Seitenbereichselement an dem Trägerkörper 36 anliegend an dem Trägerkörper 36 angebracht sein. In dem in Fig. 4 gezeigten Ausführungsbeispiel ist das elastisch-dehnbare Material 37 bzw. die elastisch-dehnbare Materialstruktur als Auflageelement 38 auf Trägerkörper 36 aufliegend an und/oder auf dem Trägerkörper 36 angebracht. Das elastisch-dehnbare Material 37 bzw. die elastisch-dehnbare Materialstruktur überspannt die Oberfläche bzw. Oberseite des Trägerkörpers 36. Ersichtlich bildet das elastisch-dehnbare Material 37 bzw. die elastisch-dehnbaren Materialstruktur den Teigauflagebereich 6. Die Biegesteifigkeit des Teigförderelements 4 im Bereich des Teigauflagebereichs 6 bzw. in dem Teigauflagebereich 6 ist aufgrund der Biegesteifigkeit des Trägerkörpers 36 auch in diesem Fall gegeben. Wie strichliert dargestellt, können mehrere Trägerkörper 36, z. B. in einer reihen- oder stapelartigen Anordnung, vorgesehen sein.

Anhand von Fig. 4 ist ersichtlich, dass ein Trägerkörper 36 querschnittlich betrachtet eine rechteckige Geometrie aufweisen kann. Der Trägerkörper 36 ist in seiner maximalen Breite typischerweise so bemessen, dass er der Breite des Teigauflagebereichs 6 entspricht.

Die Anbringung des elastisch-dehnbaren Materials 37 bzw. der elastisch-dehnbaren Materialstruktur an und/oder auf dem Trägerkörper 36 kann in allen Fällen z. B. form-, kraft- und/oder stoffschlüssig erfolgen. Insbesondere kommen stoffschlüssige Anbringungsarten wie Kleben oder Schweißen in Betracht.

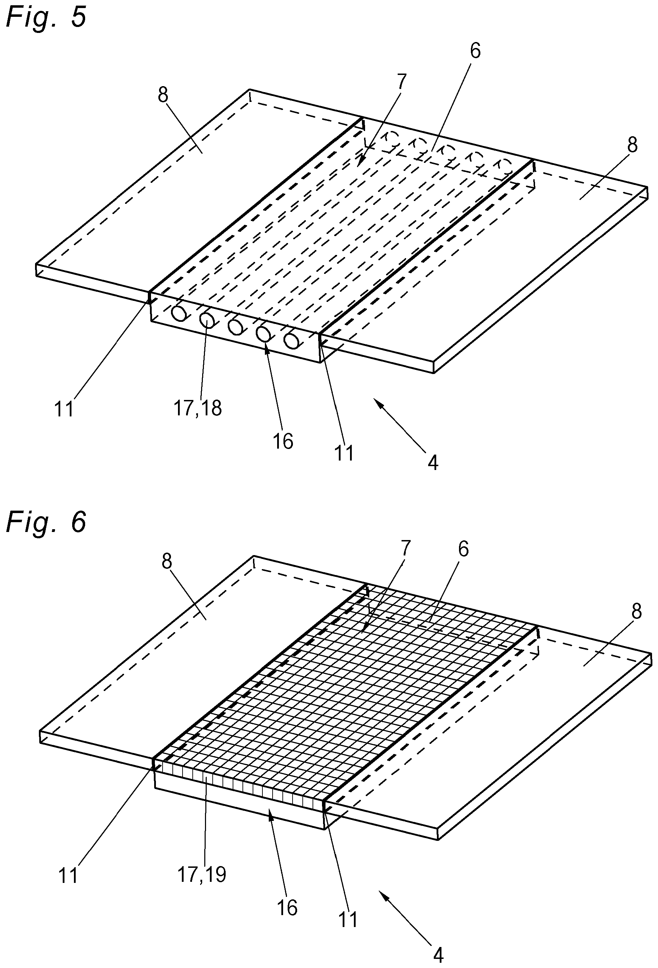

Um der Problematik einer nicht ausreichenden mechanischen Stabilität, d. h. insbesondere einer nicht ausreichenden Biege- bzw. Quersteifigkeit, des Teigförderelements 4 in dem Teigauflagebereich 6 zu begegnen, ist das Teigförderelement 4 in den in den Fig. 5 - 10 gezeigten Ausführungsbeispielen zumindest in dem Teigauflagebereich 6 zumindest abschnittsweise mit einer wenigstens ein Versteifungselement 17 umfassenden Versteifungsstruktur 16 zur Biege- bzw. Querversteifung zumindest des Teigauflagebereichs 6 versehen. Die Versteifungsstruktur 16 verleiht dem Teigförderelement 4, d. h. insbesondere dem Teigauflagebereich 6, eine ausreichend hohe mechanische Stabilität, d. h. insbesondere eine ausreichend hohe Biege- bzw. Quersteifigkeit, sodass sich mit dem Teigförderelement 4 eine (weitgehend) definierte Formung des Teigs 2, welche für nachfolgende Teigverarbeitungsprozesse erforderlich oder zumindest zweckmäßig sein kann, möglich ist. Wie z. B. anhand von Fig. 3 ersichtlich ist, kann dem Teig 2 sonach eine (weitgehend) definierte rechteckige Querschnittsgeometrie verliehen werden, da der Teigauflagebereich 6 aufgrund der Versteifungsstruktur 16, insbesondere auch beim Verschwenken der Seitenbereiche 8, nicht geneigt ist, sich durchzubiegen. Aufgrund der Versteifung des Teigförderelements 4 im Bereich des Teigauflagebereichs 6 ist eine ebene Auflage des Teigs 2 auf dem Teigförderelement 4 gewährleistet.

Aufgrund der Versteifung des Teigförderelements 4 im Bereich des Teigauflagebereichs 6 kann ferner eine etwaig auf das Teigförderelement 4 wirkende (mechanische) Spannung, um das Teigförderelement 4 eben zu halten, reduziert werden, da das Teigförderelement 4 aus sich heraus bereits derart mechanisch stabil, d. h. insbesondere steif, ist, dass eine (zusätzlich) aufgebrachte Spannung nicht oder in einem (erheblich) reduzierten Ausmaß erforderlich ist, um den Teigauflagebereich 6 bzw. das Teigförderelement 4 eben zu halten. Dies gilt für alle Ausführungsbeispiele mit einer Versteifungsstruktur 16.

Die durch die Versteifungsstruktur 16 herbeigeführte (zusätzliche) mechanische Stabilisierung bzw. Versteifung des Teigförderelements 4 zumindest in dem Teigauflagebereich 6, kann sich ferner positiv auf die Fördereigenschaften des Teigförderelements 4 auswirken. Auch dies gilt für alle Ausführungsbeispiele mit einer Versteifungsstruktur 16.

Anhand der in den Fig. 5 - 10 gezeigten Ausführungsbeispiele werden beispielhaft weitere Ausführungsformen einer Versteifungsstruktur 16, welche wenigstens ein Versteifungselement 17 umfasst, erläutert.

In dem in Fig. 5 in einer perspektivischen Ansicht gezeigten Ausführungsbeispiel umfasst die Versteifungsstruktur 16 mehrere Versteifungselemente 17 jeweils in Form eines in dem Teigauflagebereich 6 in dem Teigförderelement 4 angeordneten bzw. ausgebildeten stab- bzw. strebenartigen Versteifungskörpers 18, d. h. insbesondere eines eine Versteifung des Teigauflagebereichs 6 herbeiführenden Zugkörpers bzw. Zugstabs. Jeweilige Versteifungskörper 18 können sich, wie in Fig. 5 gezeigt, in Längsrichtung erstreckend angeordnet bzw. ausgebildet sein. Die Versteifungsstruktur 16 umfasst sonach wenigstens eine zweidimensionale Anordnung entsprechender Versteifungskörper 18. Denkbar wäre gleichwohl auch eine dreidimensionale Anordnung entsprechender Versteifungskörper 18. Die Versteifungskörper 18 können sonach in einer oder mehreren Ebenen sich in einer oder mehreren Raumrichtungen erstreckend angeordnet oder ausgebildet sein. Die Anordnung der Versteifungskörper 18 ist so gewählt, dass sich aufgrund der Anordnung und/oder Ausrichtung der Versteifungskörper 18 ein versteifender Effekt ergibt.

Die Steifigkeit eines entsprechenden Versteifungskörpers 18 kann die Steifigkeit des übrigen Teigförderelements 4 bzw. eines das übrige Teigförderelement 4 bildenden Grundmaterials übertreffen. Der Versteifungskörper 18 kann sonach aus einem im Vergleich zu dem Teigförderelement 4 steiferen Material, d. h. z. B. einem im Vergleich steiferen Kunststoff oder Metall, gebildet sein. Dies ist jedoch nicht zwingend erforderlich, als sich ein versteifender Effekt, wie erwähnt, auch aus der Anordnung mehrerer entsprechender Versteifungskörper 18 ergeben kann.

In dem in Fig. 6 in einer perspektivischen Ansicht gezeigten Ausführungsbeispiel umfasst die Versteifungsstruktur 16 ein Versteifungselement 17 in Form einer in dem Teigauflagebereich 6 in dem Teigförderelement 4 angeordnete bzw. ausgebildete textilartige Verstärkungsfaseranordnung 19. Die Verstärkungsfaseranordnung 19 umfasst eine geordnete oder ungeordnete textilartige zwei- oder dreidimensionale Anordnung mehrerer Verstärkungsfasern, d. h. z. B. Carbon- und/oder Glasfasern und/oder Metallfasern bzw. - drähten. Die textilartige Anordnung von Verstärkungsfasern kann z. B. gestrick-, gewebe-, gewirr- oder gewirkeartig sein; bei der Verstärkungsfaseranordnung 19 kann es sich sonach z. B. um ein Gestrick, Gewebe, Gewirr oder Gewirke handeln. Die textilartige Anordnung der Verstärkungsfasern ist typischerweise so gewählt, dass sich aufgrund der Anordnung und/oder Ausrichtung der Verstärkungsfasern ein versteifender Effekt ergibt. Die Verstärkungsfaseranordnung 19 bzw. die Verstärkungsfasern können sonach in einer oder mehreren Ebenen sich in einer oder mehreren Raumrichtungen erstreckend angeordnet bzw. ausgebildet sein.

Die Steifigkeit der Verstärkungsfaseranordnung 19 bzw. der Verstärkungsfasern kann die Steifigkeit des übrigen Teigförderelements 4 bzw. eines das übrige Teigförderelement 4 bildenden Grundmaterials übertreffen. Die Verstärkungsfaseranordnung 19 bzw. die Verstärkungsfasern kann bzw. können sonach aus einem im Vergleich zu dem Teigförderelement steiferen Material, d. h. z. B. einem im Vergleich steiferen Kunststoff bzw. Metall, gebildet sein. Dies ist jedoch nicht zwingend erforderlich, als sich ein versteifender Effekt, wie erwähnt, auch aus der Anordnung mehrerer entsprechender Verstärkungsfaseranordnungen 19 bzw. Verstärkungsfasern ergeben kann.

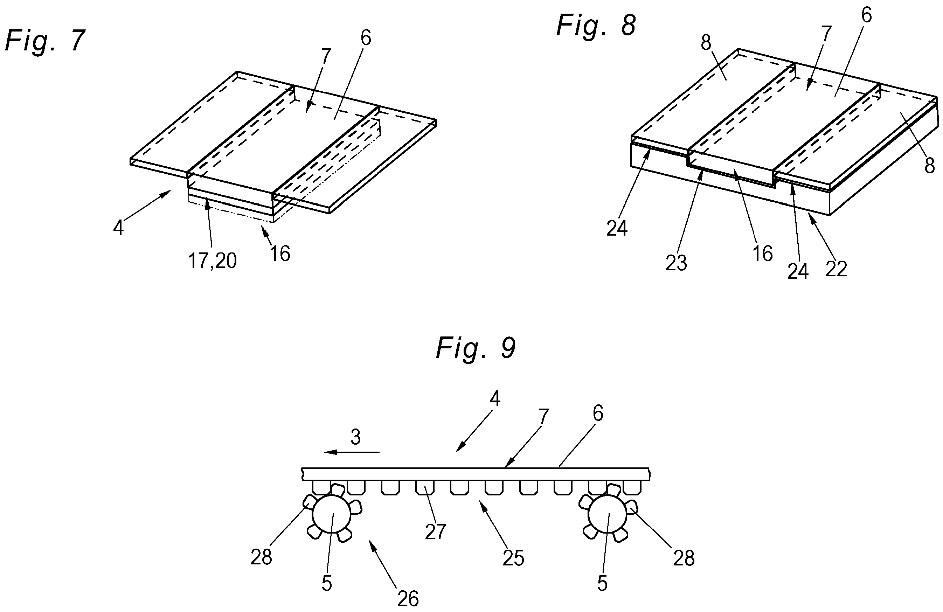

In dem in Fig. 7 in einer perspektivischen Ansicht gezeigten Ausführungsbeispiel umfasst die Versteifungsstruktur 16 ein Versteifungselement 17 in Form einer im Bereich einer dem Teigauflagebereich 6 abgewandten Oberfläche des Teigförderelements 4 angeordneten bzw. angebrachten flächigen Verstärkungsunterlage 20 aus einem steifen Material, d. h. z. B. einem steifen Kunststoff oder Metall, oder einer steifen Materialstruktur, d. h. z. B. einer steifen Kunststoff- oder Metallstruktur. Selbstverständlich kann - wie strichliert angedeutet - auch eine Anordnung mehrerer Verstärkungsunterlagen 20 vorgesehen sein. Eine entsprechende Anordnung mehrerer Verstärkungsunterlagen 20 kann so gewählt sein, dass sich aufgrund der Anordnung und/oder Ausrichtung der Verstärkungsunterlagen 20 ein (zusätzlicher) versteifender Effekt ergibt. Dies kann z. B. für eine stapelartige bzw. -förmige Anordnung von Verstärkungsunterlagen 20 gelten. Die Verstärkungsunterlagen 20 können sonach in einer oder mehreren Ebenen sich in einer oder mehreren Raumrichtungen erstreckend angeordnet oder ausgebildet sein. Die Anzahl und Anordnung der Verstärkungsunterlagen 20 kann lokal variieren, sodass gezielt lokal unterschiedliche Steifigkeiten erzeugt werden können.

Die Steifigkeit der Verstärkungsunterlage 20 kann die Steifigkeit des übrigen Teigförderelements 4 bzw. eines das übrige Teigförderelement 4 bildenden Grundmaterials übertreffen. Die Verstärkungsunterlage 20 kann sonach aus einem im Vergleich zu dem Teigförderelement 4 steiferen Material gebildet sein. Dies ist jedoch nicht zwingend erforderlich, als sich ein versteifender Effekt, wie erwähnt, auch aus der Anordnung mehrerer entsprechender Verstärkungsunterlagen 20 ergeben kann. Denkbar ist es auch, dass eine Verstärkungsunterlage 20 aufgrund einer größeren Dicke im Vergleich zu dem Teigförderelement 4 eine erhöhte Steifigkeit aufweist.

Fig. 8 zeigt ein weiteres Ausführungsbeispiel eines Teigförderelements 4 in einer perspektivischen Ansicht. Anhand des in Fig. 8 gezeigten Ausführungsbeispiels ist ersichtlich, dass die Einrichtung 1 eine Führungseinrichtung 22 umfassen kann, welche zur Führung, insbesondere zur Querführung, des Teigförderelements 4 entlang der Förderstrecke 3 eingerichtet ist. Die eine U-artige bzw. U-förmige Querschnittsgeometrie aufweisende Führungseinrichtung 22 umfasst einen muldenartig bzw. -förmig vertieften Aufnahmebereich 23 zur, insbesondere passgenauen, Aufnahme des Teigauflagebereichs 6 des Teigförderelements 4 sowie jeweilige, insbesondere im Vergleich zu dem Aufnahmebereich 23, d. h. insbesondere zu einem Boden des Aufnahmebereichs 23, erhöht angeordnete Auflagebereiche 24 zur Auflage der Seitenbereiche 8 des Teigförderelements 4.

Hieraus ergibt sich, dass das Teigförderelement 4 (auch unabhängig von dem Vorhandensein einer entsprechenden Führungseinrichtung) querschnittlich betrachtet eine gestufte Geometrie aufweisen kann. Eine querschnittlich betrachtet gestufte Geometrie des Teigförderelements 4 kann aus einer im Vergleich zu dem Teigauflagebereich 6 reduzierten Dicke bzw. Wandstärke der Seitenbereiche 8 sowie deren Anordnung bzw. Ausbildung an dem Teigauflagebereich 6 resultieren; anhand der Fig. ist ersichtlich, dass die Seitenbereiche 8 für den Fall eines querschnittlich betrachtet (im Wesentlichen) rechteckigen Teigauflagebereichs 6 im Bereich eines oberen Abschnitts einer kurzen Seite des Teigauflagebereichs 6 angeordnet oder ausgebildet sein können.

Fig. 9 zeigt ein weiteres Ausführungsbeispiel eines Teigförderelements 4 in einer Seitenansicht. Anhand des in Fig. 9 gezeigten Ausführungsbeispiels ist ersichtlich, dass das Teigförderelement 4 im Bereich seiner dem Teigauflagebereich 6 abgewandten Oberfläche mit einer, insbesondere zahnriemenartigen bzw. -förmigen, Antriebsstruktur 25 ausgebildet sein kann. Die Antriebsstruktur 25 ist eingerichtet, mit einer das Teigförderelement 4 in eine Förderbewegung versetzenden Antriebseinrichtung 26 zusammenzuwirken. Das Teigförderelement 4 kann im Bereich seiner dem Teigauflagebereich 6 abgewandten Oberfläche, welche auch als Innenseite des Teigförderelements 4 bezeichnet bzw. erachtet werden kann, sonach mit der Funktionalität eines Kraftübertragungselements, wie z. B. eines Treib- bzw. Transmissionsriemens, ausgebildet sein. Das Zusammenwirken zwischen der Antriebsstruktur 25 und einer entsprechenden Antriebseinrichtung 26 kann, wie in Fig. 9 beispielhaft gezeigt, in einer mechanischen Kopplung, d. h. insbesondere in einem mechanischen Eingriff, der teigförderelementseitigen Antriebsstruktur 25, d. h. z. B. jeweiliger zahnartig bzw. -förmig geformter Antriebselemente 27 der teigförderelementseitigen Antriebsstruktur 25, mit hierzu korrespondierenden Antriebselementen 28 - diese sind in Fig. 9 beispielhaft an entsprechenden Umlenkkörpern 5 angedeutet - der Antriebseinrichtung 26 bestehen. Durch das Zusammenwirken der teigförderelementseitigen Antriebsstruktur 25 und der Antriebseinrichtung 26, welche einen Antriebsmotor umfasst, ist eine Übertragung einer das Teigförderelement 4 in eine Förderbewegung versetzenden Antriebskraft auf das Teigförderelement 4 möglich. Es ist denkbar, dass auch eine teigförderelementseitige Antriebsstruktur 25 aufgrund ihrer geometrisch-konstruktiven Ausgestaltung eine versteifende Wirkung auf das Teigförderelement 4 ausüben kann und sonach als Versteifungsstruktur 16 erachtet werden kann.

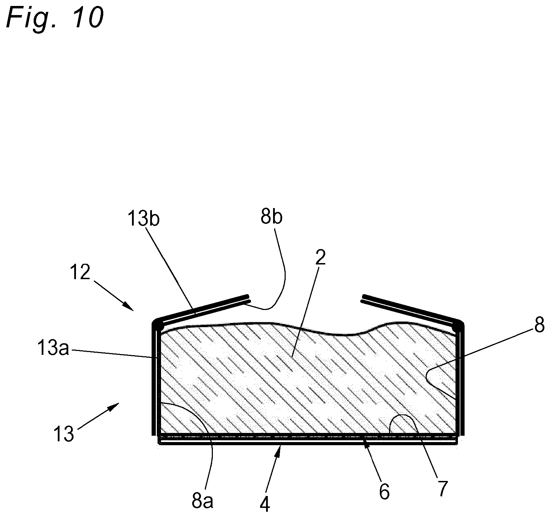

Fig. 10 zeigt ein weiteres Ausführungsbeispiel eines Teigförderelements 4 in einer quergeschnittenen Ansicht. Anhand des in Fig. 10 gezeigten Ausführungsbeispiels ist zurückkommend auf die bereits im Zusammenhang mit den Fig. 1 - 3 erwähnte Stützeinrichtung 12 ersichtlich, dass ein entsprechender Stützkörper 13, z. B. durch eine Segmentierung, mit unterschiedlich funktionalisierten bzw. Stützkörperabschnitten 13a, 13b ausgebildet sein kann. Dabei kann bezogen auf einen jeweiligen Seitenbereich 8 des Teigförderelements 4 ein erster Stützkörperabschnitt 13a einen ersten Seitenbereichabschnitt 8a in einer ersten winkligen Ausrichtung relativ zu dem Teigauflagebereich 6 stützen und wenigstens ein zweiter Stützkörperabschnitt 13b einen zweiten Seitenbereichabschnitt 8b in einer zweiten winkligen Ausrichtung relativ zu dem Teigauflagebereich 6 stützen. Die erste winklige Ausrichtung des ersten Seitenbereichabschnitts 8a kann querschnittlich betrachtet eine winklige Ausrichtung eines ersten Seitenbereichabschnitts 8a in einem Winkelbereich zwischen 0 und 90° relativ zu dem Teigauflagebereich 6 bedingen. Die zweite winklige Ausrichtung eines zweiten Seitenbereichabschnitts 8b kann querschnittlich betrachtet eine winklige Ausrichtung des zweiten Seitenbereichabschnitts 8b in einem Winkelbereich zwischen 0 und 90° relativ zu dem ersten Seitenbereichabschnitt 8a bedingen.

Die Stützkörpereinrichtung 12 kann sonach zwei relativ zu einem auf dem Teigauflagebereich 6 aufgelegten Teig 2 unterschiedlich anordenbare und ausrichtbare respektive angeordnete und ausgerichtete Stützkörper 13 bzw. Stützkörperabschnitte 13a, 13b umfassen. Die Ausrichtung der Stützkörper 13 bzw. Stützkörperabschnitte 13a, 13b kann durch eine gesonderte Führungseinrichtung (nicht gezeigt) erfolgen, welche die Stützkörper 13 bzw. Stützkörperabschnitte 13a, 13b in die entsprechende Anordnung bzw. Ausrichtung relativ zu einem jeweiligen ersten bzw. zweiten Seitenbereichabschnitt 8a, 8b bewegt.

Entsprechend können auch die Seitenbereiche 8 zwei relativ zu einem auf dem Teigauflagebereich 6 aufgelegten Teig 2 unterschiedlich anordenbare und ausrichtbare respektive angeordnete und ausgerichtete Seitenbereichabschnitte 8a, 8b umfassen. Dabei kann ein jeweiliger erster Seitenbereichabschnitt 8a insbesondere derart relativ zu einem auf dem Teigauflagebereich 6 aufgelegten Teig 2 angeordnet und ausgerichtet sein, dass dieser den Teig 2 seitlich umgibt bzw. stützt, und ein jeweiliger zweiter Seitenbereichabschnitt 8b insbesondere derart relativ zu dem auf dem Teigauflagebereich 6 aufgelegten Teig 2 angeordnet und ausgerichtet sein, dass dieser den Teig 2 zumindest abschnittsweise oberseitig umgibt bzw. stützt. Eine unterseitige Stützung des Teigs 2 ist durch den Teigauflagebereich 6 gegeben.

Die beiden Seitenbereichabschnitte 8a, 8b können dabei unabhängig voneinander in unterschiedliche Anordnungen bzw. Ausrichtungen relativ zu dem Teigauflagebereich 6 bzw. einem auf dem Teigauflagebereich 6 aufgelegten Teig 2 angeordnet und ausgerichtet werden.

Die vorstehenden Erläuterungen lassen sich, wie in Fig. 10 gezeigt, beispielhaft anhand eines querschnittlich betrachtet (im Wesentlichen) rechteckigen Teigs 2 bzw. Teigstücks erläutern, welcher mit einer Längsseite (Unterseite) auf dem Teigauflagebereich 6 aufliegt. Die ersten Seitenbereichabschnitte 8a stützen den Teig 2 jeweils seitlich, d. h. im Bereich der kurzen Seiten des rechteckigen Teigs 2 bzw. Teigstücks, die zweiten Seitenbereichabschnitte 8b stützen den Teig 2 bzw. das Teigstück oberseitig, d. h. im Bereich seiner freiliegenden Längsseite (Oberseite) des Teigs 2 bzw. Teigstücks.

Für alle Ausführungsbeispiele gilt, dass die Einrichtung 1 eine das Teigförderelement 4, insbesondere in Längsrichtung des Teigförderelements 4, (mechanisch) spannende Spanneinrichtung (nicht gezeigt) umfassen kann. Eine entsprechende Spanneinrichtung ist zur Erzeugung einer das Teigförderelement 4, insbesondere in Längsrichtung des Teigförderelements 4, spannenden Spannkraft eingerichtet. Eine entsprechende Spanneinrichtung kann ein oder mehrere auf das Teigförderelement 4 zur Spannung des Teigförderelements 4 wirkende Spannelemente umfassen. Bei entsprechenden Spannelementen kann es sich z. B. um Spannfedern handeln.

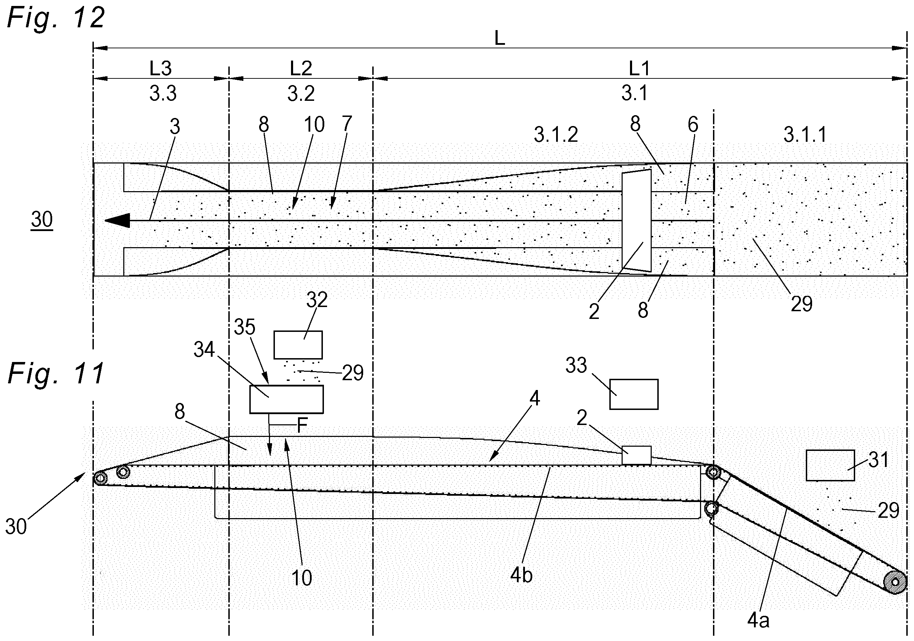

Fig. 11 zeigt eine Seitenansicht einer Einrichtung 1 gemäß einem weiteren Ausführungsbeispiel und Fig. 12 eine Aufsichtsansicht auf die in Fig. 11 gezeigte Einrichtung 1.

Anhand der Fig. 11, 12 ist ersichtlich, dass die Förderstrecke 3 mehrere unterschiedlich funktionalisierte Förderstreckenabschnitte 3.1 - 3.3 aufweisen kann, welche im Folgenden einzeln erläutert werden:
Die Förderstrecke 3 weist einen ersten Förderstreckenabschnitt 3.1. In dem ersten Förderstreckenabschnitt 3.1 der entlang der Förderstrecke 3 zu fördernde bzw. geförderte Teig 2 auf das Teigförderelement 4 bzw. auf die Förderstrecke 3 ablegbar bzw. abgelegt. Ferner wird in dem ersten Förderstreckenabschnitt 3.1 ein Trennmittel 29 auf das Teigförderelement 4 aufgebracht. Ersichtlich erfolgt die Aufbringung des Trennmittels 29 in einem Bereich des ersten Förderstreckenabschnitts 3.1, vgl. Förderstreckenunterabschnitt 3.1.1, welcher einem Bereich des ersten Förderstreckenabschnitts 3.1, vgl. Förderstreckenunterabschnitt 3.1.1, in welchem der Teig 2 auf das Teigförderelement 4 ablegbar bzw. abgelegt ist, teigförderstreckenaufwärts vorgeschaltet angeordnet ist. Der erste Förderstreckenabschnitt 3.1 kann als Einlauf- bzw. Teigablegeabschnitt bezeichnet bzw. erachtet werden.

Anhand der Fig. 11, 12 ist ersichtlich, dass der erste Förderstreckenabschnitt 3.1 längenmäßig so bemessen sein kann, dass dieser ein ausgiebiges Aufbringen von Trennmittel 29, d. h. insbesondere ein vollständiges Aufbringen von Trennmittel 29 über die gesamte Breite des Teigförderelements 4, vor dem eigentlichen Ablegen des Teigs 2 ermöglicht.

In einem dem ersten Förderstreckenabschnitt 3.1 förderstreckenabwärts nachgeschaltet angeordneten zweiten Förderstreckenabschnitt 3.2 ist der Teig 2 in seiner Querschnittsgeometrie veränderbar. Der zweite Förderstreckenabschnitt 3.2 kann als Teigformungsabschnitt bezeichnet bzw. erachtet werden. Aufgrund dem bereits in dem ersten Förderstreckenabschnitt 3.1 erfolgenden bzw. erfolgten Aufbringen von Trennmittel 29 ist der in dem zweiten Förderstreckenabschnitt 3.2 geförderte Teig 2 bereits auf ein ausgiebig bzw. vollständig mit Trennmittel 29 versehenes Teigförderelement 4 abgelegt. Die Formung des Teigs 2 in dem zweiten Förderstreckenabschnitt 3.2 kann durch die winklige, d. h. insbesondere rechtwinklige, Ausrichtung der relativ zu dem Teigauflagebereich 6 des Teigförderelements 4 bewegbar angeordneten bzw. ausgebildeten Seitenbereiche 8 des Teigförderelements 4 relativ zu dem Teigauflagebereich 6 des Teigförderelements 4 erfolgen (vgl. Fig. 3). Die Teigformung resultiert in einer (weitgehend) rechteckigen Querschnittsgeometrie des Teigs 2.

Anhand der Fig. 11, 12 ist ersichtlich, dass der Teig 2 in einem Bereich des ersten Förderstreckenabschnitts 3.1 auf den ersten Förderstreckenabschnitt 3.1 ablegbar oder abgelegt, in welchem ein den Teig 2, insbesondere U-artig bzw. U-förmig, umgebender Teigformungsbereich 10 bereits wenigstens teilweise ausgebildet ist. Der Teig 2 wird sonach in einem Bereich des ersten Förderstreckenabschnitts 3.1 abgelegt, in welchen das Teigförderelement 4 bereits eine im Vergleich zu seiner ursprünglichen Querschnittsgeometrie veränderte Querschnittsgeometrie aufweist. Diese Änderung der Querschnittsgeometrie des Teigförderelements 4 in dem ersten Förderstreckenabschnitt 3.1 steht im Zusammenhang mit der erwähnten Ausbildung eines entsprechenden, insbesondere U-artig bzw. U-förmigen Teigformungsbereichs 10 ("Schüsselung"). Das Ablegen des Teigs 2 in dem Bereich des ersten Förderstreckenabschnitts 3.1, in welchem der den Teig 2umgebende Teigformungsbereich 10 wenigstens teilweise ausgebildet ist, wirkt sich positiv auf die Teigförderung und Teigformung aus; dies ergibt sich insbesondere aus dem Umstand, dass der Teig 2 - dies gilt insbesondere für besonders fließfähige bzw. weiche Teige 2 - keine Möglichkeit hat, seitlich zu zerfließen.

In einem dem zweiten Förderstreckenabschnitt 3.2 förderstreckenabwärts nachgeschaltet angeordneten dritten Förderstreckenabschnitt 3.3 ist der in seiner Querschnittsgeometrie veränderte Teig 2 in Richtung eines Übergabebereichs 30, in welchem der Teig 2 auf eine der Einrichtung 1 förderstreckenabwärts nachgeschaltet anordenbare oder angeordnete Teigverarbeitungseinrichtung, d. h. z. B. eine weitere Teigformeinrichtung, übergebbar ist, förderbar. Der dritte Förderstreckenabschnitt 3.3 kann als Auslauf- bzw. Übergabebereich bezeichnet bzw. erachtet werden.

Wie beispielhaft anhand des ersten Förderstreckenabschnitts 3.1 dargestellt, kann jeder der genannten Förderstreckenabschnitte 3.1 - 3.3 wiederum wenigstens zwei Förderstreckenunterabschnitte umfassen, welche gegebenenfalls unterschiedliche Unterfunktionen der übergeordneten Funktion des jeweiligen Förderstreckenabschnitts 3.1 - 3.3 innehaben.

Der erste Förderstreckenabschnitt 3.1 ist in dem Ausführungsbeispiel in zwei Förderstreckenunterabschnitte 3.1.1, 3.1.2 unterteilt, wobei in dem ersten Förderstreckenunterabschnitt 3.1.1 eine Aufbringung von Trennmittel 29 auf das Teigförderelement 4 und in dem zweiten Förderstreckenunterabschnitt 3.1.2 das Auflegen von Teig 2 erfolgt. Entsprechend ist im Bereich des ersten Förderstreckenunterabschnitts 3.1.1 eine (erste) Trennmittelaufbringeinrichtung 31 angeordnet, über welche sich ein Trennmittel 29, d. h. z. B. Mehl, auf den ersten Förderstreckenunterabschnitt 3.1.1 aufbringen lässt, und im Bereich des zweiten Förderstreckenunterabschnitts 3.1.2 eine dem ersten Förderstreckenabschnitt 3.1 zugeordnete Teigablegeeinrichtung 33, bei welcher es sich insbesondere um eine Teigportioniereinrichtung in Form einer Sternwalzenportioniereinrichtung handelt, angeordnet, welche zum kontinuierlichen oder diskontinuierlichen Ablegen von Teig 2, insbesondere von definierten Teigportionen, auf den ersten Förderstreckenabschnitt 3.1 bzw. den zweiten Förderstreckenunterabschnitt 3.1.2 eingerichtet. Die Teigablegeeinrichtung 33 ist in den in den Fig. gezeigten Ausführungsbeispielen derart relativ zu der Förderstrecke 3 bzw. dem ersten Förderstreckenabschnitt 3.1 angeordnet, dass diese ein Ablegen von Teig 2 auf den ersten Förderstreckenabschnitt 3.1 bzw. den zweiten Förderstreckenunterabschnitt 3.1.2 ermöglicht.

In dem in den Fig. gezeigten Ausführungsbeispiel korreliert der erste Förderstreckenunterabschnitt 3.1.1 mit dem ersten Teigförderelementabschnitt 4a und der zweite Förderstreckenunterabschnitt 3.1.2 mit dem ersten Teigförderelementabschnitt 4b. Dies ist jedoch nicht zwingend erforderlich.

Um eine ausgiebige Aufbringung von Trennmittel 29 auf das Teigförderelement 4, insbesondere vor dem Auflegen des Teigs 2 auf das Teigförderelement 4 zu ermöglichen, ist der erste Förderstreckenabschnitt 3.1 längenmäßig besonders bemessen. Der erste Förderstreckenabschnitt 3.1 weist in dem Ausführungsbeispiel eine Länge L1 von mehr als 50% der Gesamtlänge L der Förderstrecke 3 auf.

Durch diese deutlich längere Ausführung des ersten Förderstreckenabschnitts 3.1 ist die Möglichkeit einer ausgiebigen Aufbringung von Trennmittel 29 auf das Teigförderelement 4 vor dem eigentlichen Auflegen des Teigs 2 auf das Teigförderelement 4 gewährleistet, welche sich positiv auf die Förderung und Formung des Teigs 2 auswirkt. Der erste Förderstreckenabschnitt 3.1 kann vor dem eigentlichen Auflegen des Teigs 2 vollständig mit Trennmittel 29 versehen werden. Insbesondere ist ein ausgiebiges Aufbringen von Trennmittel 29 über die gesamte Breite des Teigförderelements 4 vor dem eigentlichen Ablegen des Teigs 2 auf dem Teigförderelement 4 ermöglicht, sodass der in dem zweiten Förderstreckenunterabschnitt 3.1.2 des ersten Förderstreckenabschnitts 3.1 auf dem Teigförderelement 4 ablegbare Teig 2 bereits auf das ausgiebig bzw. vollständig mit Trennmittel 29 versehene Teigförderelement 4 ablegbar ist. Das Trennmittel 29 kann sonach derart aufgebracht werden, dass das Trennmittel 29 den auf dem Teigförderelement 4 aufliegenden Teig 2 zumindest im Bereich möglicher Kontaktbereiche mit dem Teigförderelement 4 (möglichst) vollständig umgibt.

Aus der besonderen längenmäßigen Abmessung des ersten Förderstreckenabschnitts 3.1 ergibt sich in dem in den Fig. gezeigten Ausführungsbeispiel, dass der erste Förderstreckenabschnitt 3.1 eine größere Länge L1 als der zweite und/oder der dritte Förderstreckenabschnitt 3.2, 3.3 aufweist.

Der zweite und der dritte Förderstreckenabschnitt 3.2, 3.3 können z. B. gemeinsam eine Länge L1, L2 von weniger als 50% der Gesamtlänge L der Förderstrecke 3 aufweisen. Die sich aus der Summe der Länge L1, L2 des zweiten und des dritten Förderstreckenabschnitts 3.2, 3.3 ergebende Gesamtlänge des zweiten und des dritten Förderstreckenabschnitts 3.2, 3.3 kann sonach unterhalb von 50% der Gesamtlänge L der Förderstrecke 3 liegen.

Anhand des Ausführungsbeispiels ist ersichtlich, dass der zweite und der dritte Förderstreckenabschnitt 3.2, 3.3 längenmäßig gleich bemessen sein können; prinzipiell ist es jedoch auch denkbar, dass der zweite und der dritte Förderstreckenabschnitt 3.2, 3.3 unterschiedliche Längen L2, L3 aufweisen.

Wie erwähnt, umfasst die Einrichtung 1 eine dem ersten Förderstreckenabschnitt 3.1 zugeordnete erste Trennmittelaufbringeinrichtung 31, welche eingerichtet ist, ein Trennmittel 29 auf den ersten Förderstreckenabschnitt 3.1 bzw. den ersten Förderstreckenunterabschnitt 3.1.1 aufzubringen. Die erste Trennmittelaufbringeinrichtung 31 ist derart relativ zu der Förderstrecke 3 bzw. dem ersten Förderstreckenabschnitt 3.1 angeordnet, dass diese eine Aufbringung des Trennmittels 29 auf den ersten Förderstreckenunterabschnitt 3.1.1 ermöglicht.

Die erste Trennmittelaufbringeinrichtung 31 ist insbesondere eingerichtet, das Trennmittel 29 querschnittlich betrachtet über die gesamte Breite des ersten Förderstreckenabschnitts 3.1 bzw. die gesamte Breite des Teigförderelements 4 im Bereich des ersten Förderstreckenabschnitts 3.1 aufzubringen. Derart ist die Möglichkeit einer ausgiebigen bzw. vollständigen Aufbringung von Trennmittel 29 auf das Teigförderelement 4 vor dem eigentlichen Auflegen des Teigs 2 auf das Teigförderelement 4 gewährleistet.

Die Einrichtung 1 umfasst ferner eine dem zweiten Förderstreckenabschnitt 3.2 zugeordnete zweite Trennmittelaufbringeinrichtung 32, welche eingerichtet ist, ein Trennmittel 29 auf den zweiten Förderstreckenabschnitt 3.2, insbesondere auf freiliegende Bereich von entlang des zweiten Förderstreckenabschnitts 3.2 geförderten Teigs 2, bzw. eine dem zweiten Förderstreckenabschnitt 3.2 zugeordnete Teigformeinrichtung 35 aufzubringen. Durch die zweite Trennmittelaufbringeinrichtung 32 kann gewährleitstet werden, dass in dem zweiten Förderstreckenabschnitt 3.2, in welchem, wie erwähnt, eine entsprechende Änderung der Querschnittsgeometrie des Teigs 2 bzw. eine Formung des Teigs 2 erfolgt, stets eine ausreichende Menge an Trennmittel 29 vorhanden ist.

Die (zweite) Trennmittelaufbringeinrichtung 32 ist eingerichtet, das Trennmittel 29 querschnittlich betrachtet über die gesamte Breite des zweiten Förderstreckenabschnitts 3.2, insbesondere die gesamte Breite des freiliegenden Bereichs des entlang des zweiten Förderstreckenabschnitts 3.2 geförderten Teigs 2, bzw. die gesamte Breite eines der Teigformeinrichtung 35 zugehörigen rollen- bzw. walzenförmigen Teigformelements 34 aufzubringen. Derart ist die Möglichkeit einer ausgiebigen bzw. vollständigen Aufbringung von Trennmittel 29 auf das Teigförderelement 4 bzw. auf den Teig 2 während der Änderung der Querschnittsgeometrie des Teigs 2 bzw. während der Formung des Teigs 2 gewährleistet.

Das Aufbringen des Trennmittels 29 vermittels der ersten und/oder der zweiten Trennmittelaufbringeinrichtung 31, 32 kann je nach Art des Trennmittels 29, d. h. insbesondere nach Art dessen Aggregatszustands, z. B. durch Blasen, Rieseln, Gießen, Schütten, etc. erfolgen. Die erste und/oder zweite Trennmittelaufbringeinrichtung 31, 32 kann entsprechend z. B. als Blas-, Riesel-, Gieß- oder Schütteinrichtung ausgebildet sein.

Die Einrichtung 1 umfasst ferner die bereits erwähnte, dem zweiten Förderstreckenabschnitt 3.2 zugeordnete, wenigstens ein Teigformelement 34, z. B. in Form einer Teigformrolle oder einer Teigformwalze, umfassende Teigformeinrichtung 35. Die Teigformeinrichtung 35 ist eingerichtet, eine durch den Pfeil F angedeutete, vertikal wirkende Kraft auf den Teig 2 auszuüben, um den Teig 2 (weitgehend) definiert zu verformen. Derart kann die erwähnte Änderung der Querschnittsgeometrie bzw. Formung des Teigs 2 bewirkt bzw. begünstigt werden. Durch die beschriebene ausgiebige Aufbringung von Trennmittel 29 über die erste und/oder zweite Trennmittelaufbringeinrichtung 31, 32 ist die Möglichkeit eines Anhaftens des Teigs 2 auch an dem Teigformelement 34 verhindert bzw. zumindest erheblich reduziert.

Für alle Ausführungsbeispiele gilt, dass das Teigförderelement 4 zumindest im Bereich seiner den Teigauflagebereich 6 aufweisenden Oberfläche zumindest abschnittsweise flexibel, d. h. insbesondere die den Teigauflagebereich 6 aufweisende Oberfläche des Teigförderelements 4 mit einer im Vergleich zu der nicht den Teigauflagebereich 6 aufweisenden Oberfläche größeren Flexibilität bzw. Weichheit, ausgebildet sein. Das Teigförderelement 4 könnte sonach zumindest in dem Teigauflagebereich 6 mit unterschiedlichen flexiblen Eigenschaften respektive Härte- bzw. Weichheitsgraden ausgebildet sein.

Das Teigförderelement 4 kann in allen Ausführungsbeispielen z. B. aus einem natürlichen oder synthetischen Elastomermaterial oder einem natürlichen oder synthetischen Harzmaterial, insbesondere einem PU-Harzmaterial, gebildet sein.

Die Seitenbereiche 8 können im Vergleich zu dem Teigauflagebereich 6 eine geringere Härte aufweisen. Die Seitenbereiche 8 können z. B. eine Härte in einem Bereich zwischen 70 und 80 Shore A aufweisen, wohingegen der Teigauflagebereich 6 z. B. eine Härte von wenigstens 95 Shore A aufweist.

Sämtliche Ausführungsbeispiele können beliebig mit- bzw. untereinander kombiniert werden. Mithin können einzelne, mehrere oder sämtliche Merkmale eines Ausführungsbeispiels mit einzelnen, mehreren oder sämtlichen Merkmalen wenigstens eines anderen Ausführungsbeispiels kombiniert werden.

## Patentansprüche

1. Längliches Teigförderelement (4) für eine Einrichtung (1) zur Förderung von Teig (2) entlang einer Förderstrecke (3),
welches Teigförderelement (4) ein eine Auflagefläche (7) für vermittels der Einrichtung (1) förderbaren oder zu fördernden Teigs (2) bildenden Teigauflagebereich (6) und wenigstens einen sich in Längsrichtung des Teigförderelements (4) seitlich entlang des Teigauflagebereichs (6) erstreckenden Seitenbereich (8) umfasst, wobei
der wenigstens eine Seitenbereich (8) bewegbar, insbesondere schwenkbewegbar, relativ zu dem Teigauflagebereich (6) angeordnet oder ausgebildet ist, wobei
das Teigförderelement (4) im Bereich des Teigauflagebereichs (6) ein biegesteifes Materialverhalten aufweist und im Bereich des wenigstens einen Seitenbereichs (8) ein elastisch-dehnbares Materialverhalten aufweist,
**dadurch gekennzeichnet, dass** das Teigförderelement (4), insbesondere im Bereich des Teigauflagebereichs (6), zumindest abschnittsweise durch eine biegesteife Versteifungsstruktur (16) zur Biegeversteifung des Teigauflagebereichs (6) ausgebildet ist oder wenigstens eine solche umfasst, wobei die Versteifungsstruktur (16) durch ein biegesteifes Material (36) oder eine biegesteife Materialstruktur gebildet ist, wobei die Versteifungsstruktur (16) durch einen biegesteifen Trägerkörper (36) gebildet ist, wobei an und/oder auf dem Trägerkörper (36) ein den wenigstens einen Seitenbereich (8) bildendes elastisch- dehnbares Material (37) oder eine den wenigstens einen Seitenbereich (8) bildende elastisch-dehnbare Materialstruktur angebracht ist.

2. Längliches Teigförderelement (4) nach Anspruch 1, **dadurch gekennzeichnet, dass**
das elastisch-dehnbare Material (37) oder die elastisch-dehnbare Materialstruktur als Auflageelement (38) auf dem Trägerkörper (36) aufliegend an und/oder auf dem Trägerkörper (36) angebracht ist.

3. Längliches Teigförderelement (4) nach Anspruch 1 oder 2, **dadurch gekennzeichnet, dass** die Versteifungsstruktur (16) wenigstens ein Versteifungselement (17) in Form eines, insbesondere in dem Teigauflagebereich (6), an oder in dem Teigförderelement (17) angeordneten oder ausgebildeten, insbesondere stab- oder strebenartigen, Versteifungskörpers (18) umfasst, wobei vorzugsweise der Versteifungskörper (18) als ein eine Versteifung des Teigauflagebereichs (6) herbeiführender Zugstab ausgebildet ist.

4. Längliches Teigförderelement (4) nach einem der vorangehenden Ansprüche, **dadurch gekennzeichnet, dass** die Versteifungsstruktur (16) wenigstens ein Versteifungselement (17) in Form einer, insbesondere in dem Teigauflagebereich (6), an oder in dem Teigförderelement (4) angeordneten oder ausgebildeten, insbesondere textilartigen, Verstärkungsfaseranordnung (19) umfasst, wobei vorzugsweise die Verstärkungsfaseranordnung (19) durch eine, insbesondere textilartige, Anordnung von Carbon- und/oder Glasfasern gebildet ist.

5. Längliches Teigförderelement (4) nach einem der vorangehenden Ansprüche, **dadurch gekennzeichnet, dass** die Versteifungsstruktur (16) wenigstens ein Versteifungselement (17) in Form einer im Bereich einer dem Teigauflagebereich (6) abgewandten Oberfläche des Teigförderelements (4) angeordneten bzw. angebrachten flächigen Verstärkungsunterlage (20) umfasst, wobei vorzugsweise die Verstärkungsunterlage (20) aus einem steifen Material oder einer steifen Materialstruktur gebildet ist.

6. Längliches Teigförderelement (4) nach einem der vorhergehenden Ansprüche, **dadurch gekennzeichnet, dass** das Teigförderelement (4) im Bereich seiner den Teigauflagebereich (6) aufweisenden Oberfläche zumindest abschnittsweise flexibel, insbesondere die den Teigauflagebereich (6) aufweisende Oberfläche des Teigförderelements (4) mit einer im Vergleich zu der nicht den Teigauflagebereich (6) aufweisenden Oberfläche größeren Flexibilität, ausgebildet ist.

7. Längliches Teigförderelement (4) nach einem der vorhergehenden Ansprüche, **dadurch gekennzeichnet, dass** das Teigförderelement (4) im Bereich seiner dem Teigauflagebereich (6) abgewandten Oberfläche zumindest abschnittsweise mit einer, insbesondere zahnriemenartigen bzw. -förmigen, Antriebsstruktur (25) ausgebildet ist oder eine solche umfasst, wobei die Antriebsstruktur (25) eingerichtet ist, mit einer das Teigförderelement (4) in eine Förderbewegung versetzenden Abtriebseinrichtung (26) zusammenzuwirken.

8. Längliches Teigförderelement (4) nach einem der vorhergehenden Ansprüche, **dadurch gekennzeichnet, dass** der wenigstens eine Seitenbereich (8) zur Bildung eines den vermittels des Teigförderelements (4) förderbaren oder zu fördernden Teig (2) entlang der Förderstrecke (3) querschnittlich betrachtet zumindest abschnittsweise seitlich, insbesondere U-artig, umgebenden Teigformungsbereichs (10) schwenkbewegbar relativ zu dem Teigauflagebereich (6) angeordnet oder ausgebildet ist.

9. Längliches Teigförderelement (4) nach Anspruch 8, **dadurch gekennzeichnet, dass** der wenigstens eine Seitenbereich (8) zwischen
einer ersten Schwenkstellung, in welcher der wenigstens einen Seitenbereich (8) querschnittlich betrachtet parallel zu dem Teigauflagebereich (6) angeordnet und/oder ausgerichtet ist, insbesondere derart, dass sich querschnittlich betrachtet eine einheitlich ebene Oberfläche des Teigförderelements (4) ergibt, und
wenigstens einer zweiten Schwenkstellung, in welcher der wenigstens eine Seitenbereich (8) querschnittlich betrachtet winklig, insbesondere rechtwinklig, zu dem Teigauflagebereich (6) angeordnet und/oder ausgerichtet ist, insbesondere derart, dass der den vermittels des Teigförderelements (4) förderbaren oder zu fördernden Teig (2) entlang der Förderstrecke (3) querschnittlich betrachtet zumindest abschnittsweise seitlich, insbesondere U-artig, umgebende Teigformungsbereich (10) gebildet ist, und umgekehrt, verschwenkbar ist.

10. Einrichtung (1) zur Förderung von Teig (2) entlang einer Förderstrecke (3) umfassend ein die Förderstrecke (3) definierendes längliches Teigförderelement nach einem der vorhergehenden Ansprüche.

11. Einrichtung (1) zur Förderung von Teig (2) entlang einer Förderstrecke (3) umfassend ein die Förderstrecke (3) definierendes längliches Teigförderelement nach Anspruch 9, **gekennzeichnet durch** eine Stützeinrichtung (12), welche zur Stützung und/oder Stabilisierung des wenigstens einen Seitenbereich (8) in der zweiten Schwenkstellung eingerichtet ist, wobei die Stützeinrichtung (12) wenigstens einen Stützkörper (13) umfasst, welcher wenigstens einen den wenigstens einen Seitenbereich (8) in der zweiten Schwenkstellung stützenden Stützkörperabschnitt (14) umfasst.

12. Einrichtung nach einem der Ansprüche 10 oder 11, **gekennzeichnet durch** eine Führungseinrichtung (22), welche zur Führung, insbesondere zur Querführung, des Teigförderelements (4) entlang der Förderstrecke (3) eingerichtet ist, wobei die Führungseinrichtung (22) einen, insbesondere muldenartig, vertieften Aufnahmebereich (23) zur, insbesondere passgenauen, Aufnahme des Teigauflagebereichs (6) umfasst.

13. Anlage zur Verarbeitung von Teig (2), umfassend wenigstens eine Einrichtung (1) nach einem der Ansprüche 10 bis 12.

## Claims

1. Elongate dough-conveying element (4) for a system (1) for conveying dough (2) along a conveying section (3)
which dough-conveying element (4) comprises a dough-supporting region (6) that forms a supporting surface (7) for dough (2) conveyable or to be conveyed by means of the system (1) and at least one lateral region (8) extending laterally along the dough-supporting region (6) in the longitudinal direction of the dough-conveying element (4), wherein
the at least one lateral region (8) is movably, in particular pivotably, disposed or formed relative to the dough-supporting region (6), wherein
the dough-conveying element (4) has flexurally-rigid material behavior in the vicinity of the dough-supporting region (6) and resiliently-extensible material behavior in the vicinity of the at least one lateral region (8),
**characterized in that** the dough-conveying element (4), in particular in the vicinity of the dough-supporting region (6), is configured at least in sections by a flexurally-rigid stiffening structure (16) for flexurally-stiffening the dough-supporting region (6), or comprises at least one such stiffening structure, wherein the stiffening structure (16) is formed by a flexurally-rigid material (36) or a flexurally-rigid material structure, wherein the stiffening structure (16) is formed by a flexurally-rigid supporting body (36), wherein a resiliently-extensible material (37) forming the at least one lateral region (8) or a resiliently-extensible material structure forming the at least one lateral region (8) is attached to and/or on the supporting body (36).

2. Elongate dough-conveying element (4) according to claim 1, **characterized in that** the resiliently-extensible material (37) or the resiliently-extensible material structure is attached to and/or on the supporting body (36) as a supporting element (38) resting on the supporting body (36).

3. Elongate dough-conveying element (4) according to claim 1 or 2, **characterized in that** the stiffening structure (16) comprises at least one stiffening element (17) in the form of a stiffening body (18) which is arranged or formed on or in the dough-conveying element (17), in particular in the dough-supporting region (6), in particular in the rod-like or strut-like form, wherein preferably the stiffening body (18) is designed as a tension rod bringing about a stiffening of the dough-supporting region (6).

4. Elongate dough-conveying element (4) according to one of the preceding claims, **characterized in that** the stiffening structure (16) comprises at least one stiffening element (17) in the form of a reinforcing fiber arrangement (19), in particular textile-like, arranged or configured on or in the dough-conveying element (4), in particular in the dough-supporting region (6), wherein preferably the reinforcing fiber arrangement (19) is formed by an arrangement, in particular textile-like, of carbon and/or glass fibers.

5. Elongate dough-conveying element (4) according to one of the preceding claims, **characterized in that** the reinforcing structure (16) comprises at least one stiffening element (17) in the form of a flat reinforcing base (20) arranged or attached in the region of a surface of the dough-conveying element (4) facing away from the dough-supporting region (6), wherein preferably the reinforcing base (20) is formed from a rigid material or a rigid material structure.

6. Elongate dough-conveying element (4) according to one of the preceding claims, **characterized in that** the dough-conveying element (4) is configured to be flexible at least in sections in the region of its surface comprising the dough-supporting region (6), in particular the surface of the dough-conveying element (4) comprising the dough-supporting region (6) is configured to be more flexible than the surface not comprising the dough-supporting region (6).

7. Elongate dough-conveying element (4) according to one of the preceding claims, **characterized in that** the dough-conveying element (4), in the vicinity of its surface facing away from the dough-supporting region (6), is configured, at least in sections, with a drive structure (25), in particular of the toothed-belt type or shape, or comprises such a drive structure, wherein the drive structure (25) is adapted to cooperate with a drive device (26) that sets the dough-conveying element (4) into a conveying motion.

8. Elongate dough-conveying element (4) according to one of the preceding claims, **characterized in that** the at least one lateral region (8) for forming a dough-forming region (10) surrounding the dough (2) that can be conveyed or is to be conveyed along the conveying section (3) by means of the dough-conveying element (4), when viewed in cross-section, at least in sections laterally, in particular in a U-shaped manner, is arranged or configured such that it can be pivoted relative to the dough-supporting region (6).

9. Elongate dough-conveying element (4) according to claim 8, **characterized in that** the at least one lateral region (8) can be pivoted between
a first swivel position, in which the at least one lateral region (8) is arranged and/or aligned parallel to the dough-supporting region (6) when viewed cross-sectionally, in particular such that a uniformly flat surface of the dough-conveying element (4) results when viewed cross-sectionally, and
at least one second pivoted position, in which the at least one lateral region (8), viewed in cross-section, is arranged and/or aligned at an angle, in particular at right angles, to the dough-supporting region (6), in particular such that the dough-forming region (10) surrounding the dough (2) which can be or is to be conveyed by means of the dough-conveying element (4) along the conveying section (3), viewed in cross-section, is formed laterally, in particular U-shaped, at least in sections , and vice versa.

10. System (1) for conveying dough (2) along a conveying section (3) comprising an elongate dough-conveying element according to one of the preceding claims defining the conveying section (3).

11. System (1) for conveying dough (2) along a conveying section (3) comprising an elongate dough-conveying element defining the conveying section (3) according to claim 9, **characterized by** a supporting device (12) arranged for supporting and/or stabilizing the at least one lateral region (8) in the second pivoted position, wherein the supporting device (12) comprises at least one supporting body (13) which comprises at least one supporting body portion (14) supporting the at least one lateral region (8) in the second pivoted position.

12. System according to one of claims 10 or 11, **characterized in that** a guiding device (22) is provided for guiding, in particular for transversely guiding, the dough-conveying element (4) along the conveying section (3), wherein the guiding device (22) comprises a recessed, in particular trough-like, receiving region (23) for receiving, in particular accurately fitting, the dough-supporting region (6).

13. Facility for processing dough (2), comprising at least one system (1) according to one of claims 10 to 12.

## Revendications

1. Élément de transport de pâte allongé (4) pour un dispositif (1) permettant de transporter de la pâte (2) le long d'une ligne de transport (3),
lequel élément de transport de pâte (4) comprend une zone de dépose de pâte (6), formant une surface de dépose (7) pour de la pâte (2) pouvant être transportée ou devant être transportée au moyen du dispositif (1), et au moins une zone latérale (8) s'étendant latéralement dans la direction longitudinale de l'élément de transport de pâte (4) le long de la zone de dépose de pâte (6), dans lequel
la au moins une zone latérale (8) est agencée ou formée de manière mobile, en particulier de manière pivotante, par rapport à la zone de dépose de pâte (6), dans lequel
l'élément de transport de pâte (4) présente un comportement de matériau résistant à la flexion dans la région de la zone de dépose de pâte (6) et présente un comportement de matériau élastiquement extensible dans la région de la au moins une zone latérale (8),
**caractérisé en ce que** l'élément de transport de pâte (4), en particulier dans la zone de dépose de pâte (6), est formé au moins par sections par une structure de raidissement (16) rigide en flexion permettant de raidir en flexion la zone de dépose de pâte (6), ou en comprend au moins une, dans lequel la structure de raidissement (16) est formée par un matériau rigide en flexion (36) ou par une structure de matériau rigide en flexion, dans lequel la structure de raidissement (16) est formée par un corps de support (36) rigide en flexion, dans lequel un matériau élastiquement extensible (37) formant la au moins une zone latérale (8), ou une structure de matériau élastiquement extensible formant la au moins une zone latérale (8) est mis en place au niveau de et/ou sur le corps de support (36).

2. Élément de transport de pâte allongé (4) selon la revendication 1, **caractérisé en ce que**
le matériau élastiquement extensible (37) ou la structure de matériau élastiquement extensible est appliqué(e) en tant qu'élément de dépose de pâte (38) au niveau de et/ou sur le corps de support (36) de manière à reposer sur le corps de support (36).

3. Élément de transport de pâte allongé (4) selon la revendication 1 ou 2, **caractérisé en ce que** la structure de raidissement (16) comprend au moins un élément de raidissement (17) sous la forme d'un corps de raidissement (18), en particulier de type barre ou entretoise, agencé ou formé au niveau de ou dans l'élément de transport de pâte (17), en particulier dans la zone de dépose de pâte (6), dans lequel le corps de raidissement (18) est de manière préférée réalisé sous la forme d'une barre de traction provoquant un raidissement de la zone de dépose de pâte (6).

4. Élément de transport de pâte allongé (4) selon l'une quelconque des revendications précédentes, **caractérisé en ce que** la structure de raidissement (16) comprend au moins un élément de raidissement (17) sous la forme d'un agencement de fibres de raidissement (19), en particulier de type textile, agencé ou formé au niveau de ou dans l'élément de transport de pâte (4), en particulier dans la zone de dépose de pâte (6), dans lequel l'agencement de fibres de raidissement (19) est formé de manière préférée par un agencement de fibres de carbone et/ou de verre, en particulier de type textile.

5. Élément de transport de pâte allongé (4) selon l'une quelconque des revendications précédentes, **caractérisé en ce que** la structure de raidissement (16) comprend au moins un élément de raidissement (17) sous la forme d'un support de renfort (20) plat agencé ou mis en place dans la région d'une surface de l'élément de transport de pâte (4) opposée à la zone de dépose de pâte (6), dans lequel le support de renfort (20) est de manière préférée constitué d'un matériau rigide ou d'une structure de matériau rigide.

6. Élément de transport de pâte allongé (4) selon l'une quelconque des revendications précédentes, **caractérisé en ce que** l'élément de transport de pâte (4) est formé de manière au moins de manière flexible par sections dans la région de sa surface présentant la zone de dépose de pâte (6), en particulier de la surface de l'élément de transport de pâte (4) présentant la zone de dépose de pâte (6) et dont la flexibilité est supérieure à la surface ne présentant pas la zone de dépose de pâte (6).

7. Élément de transport de pâte allongé (4) selon l'une quelconque des revendications précédentes, **caractérisé en ce que** l'élément de transport de pâte (4) est formé avec une structure d'entraînement (25), en particulier de type courroie crantée ou en forme de courroie crantée dans la région de sa surface opposée à la zone de dépose de pâte (6) au moins par sections, ou comprend une telle structure, dans lequel la structure d'entraînement (25) est conçue pour coopérer avec un dispositif de sortie d'entrainement (26) qui met l'élément de transport de pâte (4) en mouvement de transport.

8. Élément de transport de pâte allongé (4) selon l'une quelconque des revendications précédentes, **caractérisé en ce que** la zone de formage de pâte (10), entourant, en particulier en forme de U, au moins par sections latéralement lorsque celle-ci est considérée en coupe transversale, au moins une zone latérale (8) afin de former une pâte (2) pouvant être transportée ou devant être transportée au moyen de l'élément de transport de pâte (4) le long de la ligne de transport (3), est agencée ou formée de manière pivotante par rapport à la zone de dépose de pâte (6).

9. Élément de transport de pâte allongé (4) selon la revendication 8, **caractérisé en ce que** la au moins une zone latérale (8) peut être pivotée entre
une première position de pivotement dans laquelle la au moins une zone latérale (8) est agencée et/ou orientée, lorsque celle-ci est considérée en coupe transversale, parallèlement à la zone de dépose de pâte (6), en particulier de manière à obtenir une surface uniformément plane de l'élément de transport de pâte (4) lorsque celui-ci est considéré en coupe transversale, et
au moins une deuxième position de pivotement, dans laquelle la au moins une zone latérale (8) est agencée et/ou orientée, lorsque celle-ci est considérée en coupe transversale, avec un angle, en particulier à angle droit, par rapport à la zone de dépose de pâte (6), en particulier de telle manière que la zone de formation de pâte (10) qui entoure, en particulier en forme de U, au moins par sections latéralement lorsque celle-ci est considérée en coupe transversale, la pâte (2) pouvant être transportée ou devant être transportée au moyen de l'élément de transport de pâte (4) le long de la ligne de transport (3) est formée, et inversement.

10. Dispositif (1) permettant de transporter de la pâte (2) le long d'une ligne de transport (3), comprenant un élément de transport de pâte allongé selon l'une quelconque des revendications précédentes définissant la ligne de transport (3).

11. Dispositif (1) permettant de transporter de la pâte (2) le long d'une ligne de transport (3), comprenant un élément de transport de pâte allongé selon la revendication 9 définissant la ligne de transport (3), **caractérisé par** un dispositif de soutien (12) qui est conçu pour soutenir et/ou stabiliser la au moins une zone latérale (8) dans la deuxième position de pivotement, dans lequel le dispositif de soutien (12) comprenant au moins un corps de soutien (13) qui comprend au moins une section de corps de soutien (14) soutenant la au moins une zone latérale (8) dans la deuxième position de pivotement.

12. Dispositif selon l'une quelconque des revendications 10 ou 11, **caractérisé par** un dispositif de guidage (22) conçu pour guider, en particulier pour guider transversalement, l'élément de transport de pâte (4) le long de la ligne de transport (3), dans lequel le dispositif de guidage (22) comprend une zone de réception (23) en creux, en particulier de type cuvette, permettant d'accueillir, en particulier avec précision, la zone de dépose de pâte (6).

13. Installation de traitement de pâte (2) comprenant au moins un dispositif (1) selon l'une quelconque des revendications 10 à 12.
